# EUROPÄISCHE PATENTANMELDUNG

(11) **EP 2 271 126 A1**
(43) Veröffentlichungstag der Anmeldung: **05.01.2011**
(21) Anmeldenummer: 10186005.4
(22) Anmeldetag: 05.02.2007
(51) Int. Cl.: H04Q 3/00, H04M 3/42

(54) **Verfahren zur Steuerung der Behandlung der für einen gerufenen Telekommunikations (TK)- Teilnehmer bestimmten Anrufe unter Verwendung eines Technischen-Kommunikationsgruppen-Vorgangs (TKGVs)**

(30) Priorität: 03.02.2006 DE 102006005923; 21.02.2006 DE 102006008918; 01.03.2006 DE 102006010486; 07.03.2006 DE 102006011438; 19.05.2006 DE 102006023918; 25.09.2006 DE 102006045879; 14.11.2006 DE 102006053893; 29.11.2006 DE 102006057066; 29.11.2006 US 867712 P; 29.11.2006 US 867727 P
(62) Teilanmeldung aus: 07711167.2
(71) Anmelder: Sigram Schindler Beteiligungsgesellschaft mbH, 10587 Berlin (DE)
(72) Erfinder: Schindler, Sigram, Prof., 14129, Berlin (DE); Schulze, Jürgen, 13595, Berlin (DE); Schönberg, Dörte, 10553, Berlin (DE)
(74) Vertreter: Müller, Wolfram Hubertus

(57) **Zusammenfassung**

Die Erfindung betrifft ein Verfahren zur Steuerung der Behandlung der für einen gerufenen Telekommunikations (TK)- Teilnehmer bestimmten Anrufe unter Verwendung eines Technischen-Kommunikationsgruppen-Vorgangs (TKGVs), mit den Schritten:
- Bereitstellen mindestens einer Telekommunikationsfunktion (TKF), die jeweils eine definierte Anrufbehandlung eines TKGVs ausführen kann;
- Speichern in jeder der mindestens einen TKFs, als Reaktion auf die Eingabe durch den gerufenen Teilnehmer, von Attributen zu denjenigen anrufenden Teilnehmern, deren TKGVs die in der jeweiligen TKF definierte Anrufbehandlung erfahren sollen;
- Vornahme einer Anruferidentifizierung zu einem TKGV;
- in jeder der mindestens einen TKFs, Feststellen anhand der Anruferidentifizierung und der gespeicherten Attribute, ob der TKGV die in der jeweiligen TKF definierte Anrufbehandlung erfahren soll;
- für diesen Fall, Durchführen der Anrufbehandlung durch die jeweilige TKF.

## Beschreibung

### A. Gegenstand der Erfindung

Die Erfindung betrifft ein Verfahren zum "Betroffenen-individuell" spezifizierbaren Realzeit-nahen Management vor allem attributierbarer - d.h. durch Attribute beschreibbarer - Technischer Kommunikationsgruppen-Vorgänge (ATKGVs) einer Technischen Kommunikationsgruppen-Plattform (ATKGP). Dieses Management eines ATKGVs - auch deren/dessen Neueinrichtung bzw. Terminierung - ist erfindungsgemäß also spezifizierbar durch einen "attributierbaren Teilnehmer" (ATLN), i.d.R. nur für ihn und falls er von diesem ATKGV betroffen ist, und zwar mittels eines von ihm identifizierten/spezifizierten "Attributs" (AATTs).

Operativ realisiert wird dieses "ATKGV-Betroffenen-individuell" spezifizierbare Management dieses ATKGVs mittels mindestens einer - von der ATKGP (= "attributierbaren technischen Kommunikationsgruppen-Plattform") dafür statisch oder dynamisch eingerichteten, ggf. Betroffenen-individuellen - ausführbaren attributierbaren ATKF (= "attributierbaren Telekommunikations-Funktion"), die i.d.R. von diesem ATLN per AATT spezifiziert wurde. Dieses/Diese AATT/ATKF kann insbesondere der Berichterstattung an ATLNs über einen solchen ATKGV dienen. Eine weitere Besonderheit dieses erfindungsgemäßen Realzeit-nahen ATKGV-Managements besteht darin, dass es auf durchgängig automatisierbaren Erzeugungen/Interaktionen aller o.g. Objekte der ATKGP beruht, was seine "Nahe-Realzeit"-Fähigkeit ermöglicht.

### B. Hintergrund der Erfindung

Erste Hinweise auf diese zukünftige Klasse von TKGVs größerer technischer Komplexität - bei gleichzeitig beträchtlich reduzierter Komplexität ihrer Benutzung, weil diese hochgradig automatisiert sein wird - sind die heute angebotenen
■ "Email"-/"Forum"-/"Blog"-Dienste des paketvermittelten WWWs/Internets und oder
■ "push to talk"-/"push to listen"-/"push to know"-/"push to ...."-Dienste der TK-Netze unterschiedlicher Provenienzen,
wobei nachfolgend auch das Internet/WWW als TK-Netz angesehen/bezeichnet wird.

Ein Betroffenen-individuell bestimmtes Management z.B. eines einzelnen TKGVs dieser Dienste gibt es heute jedoch nicht. Das erfindungsgemäße Verfahren sieht nun erstmals vor zu ermöglichen, u.A. derartige einzelne TKGVs durch von ihnen Betroffene individuell/umfassend/dynamisch/zeitnah zu managen, jedenfalls so weit gehend wie es ihre TKGP ermöglicht, worüber diese Betroffenen erfindungsgemäß umfassend informierbar sind.

**B.1.** Die DE 199 43 742 A1 beschreibt ein Verfahren zum zur Verfügung stellen zusätzlicher TK-Dienste bei einem gerufenen TLN durch geeignetes Routen der bei ihm ankommenden Rufe über ein spezifisches TK-Netz. Sie sieht u.A. also vor, dass an einen ATLN (TLN attributiert durch seine Telefonnummer) gerichtete Anrufe (= ATKGVs) über ein von diesem TLN preselektiertes TK-Netz geführt (= geroutet) werden. Mittels dieses Routens eines solchen TKGVs - dieses "Zweier-TKGVs" dieser (i.d.R. für ihn temporären) "Zweier-TKG", die (mindestens) mittels der den gerufenen TLN identifizierenden Telefonnummern attributiert ist - über das von Letzterem preselektierte TK-Netz, das weitere Dienstleistungen erbringen kann, werden diesem TLN (ggf. nur ihm) zusätzliche TK-Dienste bereitgestellt.

Die vorliegende Erfindung umfasst dagegen sowohl auf mehr als zwei TLNs beruhende TKGVs bzw. deren TKFs als auch an weitere ATLNs (d.h.: an TLNs außerhalb dieses TKGVs bzw. dieser ATKGP) bereitgestellte Dienstleistungen, die ATKFs erbringen.

**B.2.** Die EP 0 837 611 A2 beschreibt ein Verfahren der Einbeziehung in einen Telefonanruf - d.h. wiederum nur in eine/n "Zweier-TKG"/"Zweier-TKGV" - ganz speziell von nur "Terminierungs-verlängernden" "Fernmeldenetzdiensten" durch den gerufenen TLN. In der Terminologie der hier vorliegenden Druckschrift spricht sie also zwar von der gleichen Art von TLNs und TKGVs wie die DE19943742A1, aber von nun sehr beschränkten Dienstleistungen i.d.S., dass sie von dem den Anruf terminierenden TK-Netz für diesen - erst an Stelle seiner unmittelbaren Terminierung beim gerufenen TLN - "nur Terminierungs-verlängernd" bereitgestellt werden können. Dagegen können die Dienstleistungen der Verfahren der DE19943742A1 und auch der vorliegenden Druckschrift für einen TKGV schon lange vor dessen Terminierung bei wem auch immer wirksam werden.

In der - die Erfindung der EP 0 837 611 A2 kennzeichnenden - "Anrufbehandlungstabelle" des gerufenen TLNs wird nämlich von diesem festgelegt, welches Anrufbehandlungsverfahren ein für ihn ankommender Anruf erfahren soll (nachdem er bei ihm terminiert werden soll), wie beispielsweise eine Anrufweiterleitung oder eine Anruf-Medienkonvertierung. Hierbei sorgt die Anrufbehandlungstabelle für die Anwendung der jeweiligen Anrufbehandlungsverfahren für Anrufe bei diesem TLN einzig und allein für die in ihr bereits gespeicherten Anrufer und Anrufbehandlungsverfahren. In der EP 0 837 611 A2 ist also nicht nur keine dynamische Feststellung der in einem ankommenden Ruf anzuwendenden Anrufbehandlungsverfahren vorgesehen - wie auch nicht im Anrufbehandlungsverfahren des o.g. "DE19943742A1-Typs", das aber immerhin das "vor-Terminierungs"-Routing eines ankommenden Rufs erfasst - sondern die EP0837611A2 kennt überhaupt keine "vor-Terminierungs"-Anrufbehandlung.

**B.3.** Genau wie die eben kommentierte Druckschrift beschreibt die WO 85/ 02510 ein Verfahren der Einbeziehung in einen Telefonanruf - d.h. wiederum nur ganz speziell in eine/n "Zweier-TKG"/"Zweier-TKGV" - ganz speziell von nur "Terminierungs-verlängernden" TK-Diensten ganz speziell durch den gerufenen TLN, lediglich in einer etwas flexibleren Variation. Sie ist also aus den oben genannten Gründen für die vorliegende Anmeldung gleichermaßen irrelevant.

**B.4.** Die US 4,747,127 beschreibt ein Verfahren zunächst einmal für eine ganz spezielle TK-Anordnung, die eine völlig andere Struktur aufweist als die der vorliegenden Druckschrift: Bereits deren ABSTRACT offenbart-ebenso wie deren FIG. 1 und deren SUMMARY OF THE INVENTION und GENERAL DESCRIPTION in vielen Textpassagen - dass diese einen in deren erfindungsgemäßes Verfahren involvierten Prozessor/Computer vor den eigentlichen TK-Endgeräten (z.B. Telefonen) benötigt, während das Verfahren der vorliegenden Druckschrift auf einen solchen "Vorschalt-Prozessor/Computer" grundsätzlich verzichten kann,

Über diesen fundamentalen Unterschied hinausgehend, sieht das US-4,747,127-Verfahren u.A. vor, dass deren "*first program routine*" ein "*updating*" erfährt, also verändert wird (siehe z.B. Anspruch 1, Spalte 42, Zeilen 67/68 und Spalte 43, Zeile 4, sowie die eben bereits zitierten Abschnitte dieses US-Patents) - wogegen das erfindungsgemäße Verfahren auf ein solches "*updating*" der "Basisfunktionalität" des TK-Netzes für das bzw. auf dem eine erfindungsgemäße TKGP vorgesehen ist, verzichten kann, also diese wichtige "Basisfunktionalität" des TK-Netzes absolut unberührt lassen kann.

Ein dritter grundsätzlicher Unterschied zwischen beiden Verfahren besteht darin, dass das US-4,747,127-Verfahren für die Programmierung zusätzlicher TK-Dienste vom Programmierer das Verständnis des Zustands-/Signalisierungs-Automaten der "Basisfunktionalität" des TK-Netzes erfordert -wogegen das erfindungsgemäße Verfahren eine solche, den Einsatz der US-4,747,127-Erfindung behindernde, Beschränkung nicht unbedingt vorsieht.

Die vielen weiteren technisch wesentlichen Unterschiede zwischen diesen beiden Verfahren brauchen hier nicht weiter erörtert zu werden.

**B.5.** Das Service-Modifikationsverfahren der US 6,330,586 B1 unterscheidet sich insofern ganz grundsätzlich von dem Service-Definitions-/Modifikationsverfahren der vorliegenden Druckschrift, als das erstere nur die Auswahl bereits vorgegebener "statischer" Software-Module und ggf. deren Modifikation gestattet - aber nicht die Benutzer-gesteuerte Definition neuer (also "dynamischer") Funktionalitäten, die die vorliegende Erfindung umfasst.

Darüber hinaus benötigt letztere keine "*kooperierenden intelligenten Agenten*" einer ebenso permanenten Art, die die allgegenwärtige Grundlage des US-6,330,586-B1-Verfahrens bilden.

**B.6.** Die US 2002/0138603 A1 beschreibt ein Verfahren ähnlich denen der oben in B.2. und B.3. kommentierten Druckschriften zur Einbeziehung in einen Telefonanruf - d.h. wiederum nur ganz speziell in eine/n "Zweier-TKG"/"Zweier-TKGV" - ganz speziell von nur "Routing-basierten" TK-Diensten eines "*Redirect Servers*", die außerdem auf diesem vor der Initiierung eines von ihnen betroffenen Telefonanrufs eingerichtet sein müssen. Sie ist also aus den oben genannten Gründen für die vorliegende Anmeldung gleichermaßen irrelevant.

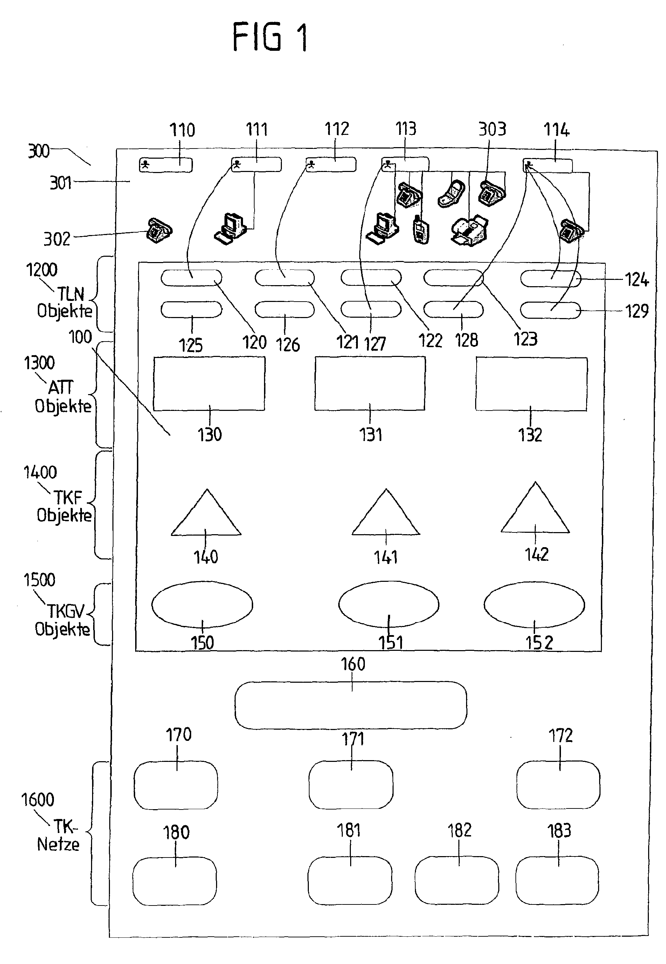

**B.7.** Die US 7,069,259 B2 benutzt in ihrem Verfahren "*Multiattribute Preferences*" (ab Spalte 2, Zeilen 33-36 und etwa 65/66) - scheinbar ähnlich wie die vorliegende Erfindung - aber tatsächlich Attribute in einem ganz anderen Sinn und zu völlig anderem Zweck:
■ Wie der Name dieser US-7,069,259-B2-Attribute bereits sagt, artikulieren diese i.d.R. lediglich Präferenzen - die ATTs in der vorliegenden Erfindung beschreiben dagegen letztendliche Notwendigkeiten, die sich womöglich gegenseitig überschreiben können, die aber nicht von einem den ATTs übergeordneten "Entscheidungs-System" beliebig verwertet werden können.
■ Letzteres ist die Folge der wesentlichen Tatsache, dass das Verfahren der US 7,069,259 B2 die (primär automatisierte) Generierung von US-7,069,259-B2-Attributen zum Ziel hat - also: NICHT von ATTs der eben beschriebenen Art - also eine völlig andere Aufgabe lösen will, als sie die vorliegende Erfindung löst: Das Verfahren der US 7,069,259 B2 ist ein "Auszeichnungsverfahren" oder "Beschreibungsverfahren" von Nachrichten in einem Nachrichtenübermittlungssystem, will also gar nicht das vollständige und definitive Managementsystem für diese Nachrichten festzulegen gestatten, wie es die vorliegende Erfindung offenbart. Die Tastsache, dass die US-7,069,259-B2-Attribute auch manuell erzeugt werden können (siehe Spalte 3, Zeilen 40-58), ändert nichts an deren "Präferenz"-Charakter, den dieses US-Patent an keiner Stelle zur Disposition stellt.
■ D.h.: Die US-7,069,259-B2-Attribute ihres "MAP*-Systems" sind erst das Input der "Künstliche Intelligenz alias Automatisierte Entscheidungs"-Verfahren zum Inhalt- und Kontextsensitiven letztendlichen "Routing" von Nachrichten - für das also die Präferenz-Attribute nur "Richtlinien" (wörtlich: "*guiding*", also nicht "determining"), d.h. nicht final bestimmend sind, wie die ATTs für das TKGV-Management. Die US 7,069,259 B2 beschreibt diesen Input-Charakter ihrer Attribute für ein - von ihr nicht offenbartes/beschränktes - TKGV-Management etwa in
   ○ den ersten drei Absätzen ihrer Spalte 3,
   ○ ihrer Fig. 1 und deren Erläuterung in Spalte 4, Zeile 49, bis Spalte 7, Zeile 33, insbesondere aber in der expliziten Klarstellung im Kasten 34 der Fig. 1: ITEMS DI-RECTED TO USER BASED IN PART UPON AUTOMATED DECISIONS AND/OR USER PREFERENCES und
   ○ allen ihren Ansprüchen, insbesondere ihrem Anspruch 1, 45, 73, 76 und 86,
   wobei sie das Output der Verwertung ihrer Präferenz-Attribute von Nachrichten, das ist die Entscheidung hinsichtlich des tatsächlichen Managements dieser Nachrichten, den "Künstliche Intelligenz alias Automatisierte Entscheidungs"-Verfahren in ihrer langen Liste von futuristischen wissenschaftlichen Publikationen überlässt.
   Außerdem unterscheidet sich das Verfahren der US 7,069,259 B2 insofern fundamental von dem der vorliegenden Druckschrift, als es beschränkt ist auf diese Attributierung von a) kompletten b) einzelnen c) Nachrichten aller Art eines d) einzelnen Benutzers, aber nicht betrachtet die vielfältige Managementfunktionalitäten - die die vorliegende Erfindung offenbart - für/von
■ Realzeit-Interaktionen in Realzeit-Audio-Nideo-Kommunikationsvorgängen (c)), mit der Folge, dass das Verfahren der US 7,069,259 B2 nicht anwendbar ist in so wichtigen TKGVs wie Telefonanrufen/-konferenzen,
■ Nachrichten aus Benutzer-Gruppen (d)), sodass es selektive Kommunikationsbeiträge nicht erfassen kann,
■ Nachrichten-Fragmenten oder Nachrichten-Konglomeraten (a) und b)).
Schließlich - nicht weniger wichtig als ihre drei eben genannten Beschränkungen gegenüber der offenbarten Funktionalität der vorliegenden Erfindung, sondern diesen Beschränkungen entsprechend - betrachtet die US 7,069,259 B2 keine Interaktionen von von TKGVs Betroffenen (jedweder TKGP-interner oder -externer Objekte/Informationen/Ressourcen) während deren Bestehens mit diesen TKGVs, während dies in vielen Anwendungsfällen des erfindungsgemäßen Verfahrens eines seiner wesentlichen Merkmale ist - etwa bei Spielen von zwei oder mehr Mannschaften mit- oder gegeneinander.

**B.8.** Auf die Dutzenden von weiteren Patenten zum Thema "Call Management" braucht hier nicht eingegangen zu werden, weil in diesen (und in inhaltlich vergleichbaren Druckschriften) die in der hier vorliegenden Druckschrift behandelte Problematik des Managements von "attributierbaren TKGVs zwischen attributierbaren TLNs durch von diesen TKGVs betroffene TLNs", wie sie der nachfolgende Abschnitt **C**. deutlicher skizziert, überhaupt nicht adressiert wird - sondern diese sich auf den Verbindungsaufbau-Aspekt zwischen einem einzelnen Anrufer und einem von ihm einzeln Gerufenen (der allerdings dem Anrufer nicht bekannt zu sein braucht) beschränken, wobei Letzterer oder beide auch noch ausschließlich über seine/ihre L3-Adresse/n (gemäß dem OSI-Referenzmodell) identifiziert wird/werden.

**B.9.** Auf die Hunderte von WWW-/Internet-Systeme zum Bereich "Foren"/"Blogs" braucht ebenfalls nicht eingegangen zu werden, weil in diesen (und ihnen inhaltlich vergleichbaren Systeme) die in der hier vorliegenden Druckschrift behandelte Problematik des Managements von "attributierbaren TKGVs zwischen attributierbaren TLNs durch von diesen TKGVs betroffene TLNs", wie sie der nachfolgende Abschnitt C. deutlicher skizziert, überhaupt nicht adressiert wird - sondern diese den von ihnen Betroffenen keinerlei Möglichkeiten der Selbstbestimmung der TLNs hinsichtlich dieser TKGs/TKGVs ermöglichen.

**B.10.** Die Conference Management Units (CMUs) könnten bei den Dienstleistungen einiger speziellerer TKGVs den Eindruck erwecken, diese Dienstleistungen kämen dem Bereich der grundlegenden Ideen der vorliegenden Erfindung nahe. Tatsächlich aber beinhalten sie selbst keinerlei Möglichkeit der TLN-selbstbestimmten und Attribute-gesteuerten Kontaktaufnahme und/oder Kommunikationsgruppenvorgangs-Gestaltung.

Diesen Abschnitt abschließend: Als zum Stand der Technik gehörend werden, den vorstehenden Ausführungen Rechnung tragend, insbesondere alle konventionellen TK-Dienstleistungen bei üblichen Telefon-Anrufen betrachtet - patentiert oder nicht - die nachfolgend in ihrer Gesamtheit als "elementare Telefon-/Bildtelefon-Anrufe" bezeichnet werden. Insbesondere sind alle solchen Anrufe elementar, die vollständig auf von wem auch immer veröffentlichten (insbesondere auf von wem auch immer standardisierten) TK-Diensten beruhen.

### C. Zusammenfassung von Ausführungsbeispielen der Erfindung

Zunächst wird für die Beschreibung des erfindungsgemäßen Verfahrens- auch für ihren Anspruchswortlaut - eine rein sprachliche Vereinfachung eingeführt: Die Attributierbarkeit der ATKGP-Objekte wird in ihren Bezeichnern weggelassen, sodass diese i.d.R. als TLN, TKGV, ATT/TKF und TKGP bezeichnet werden, wie vorangehend auch bereits geschehen.

Sodann wird vorab angemerkt:
■ Nicht nur kann die Definition beliebiger ATTs von/durch TLNs mittels einer beliebigen Programmiersprache (angefangen von FORTRAN, ALGOL, PASCAL, COBOL, LISP; APL, .... über etwa SQL, C und C++, .... bis JAVA, HTML, XML, ...) bzw. deren semantisch ggf. noch höheren und jedenfalls "pragmatisch optimierten Funktionen" an der Benutzeroberfläche vorgenommen werden,
■ sondern auch die Übersetzungen dieser ATTs in semantisch äquivalente ausführbare TKFs mittels eines Compilers/Interpreters einer solchen Programmiersprache bzw. deren Integration in die TKGP - mittels eines Linkers/Loaders und von den beteiligten TK-Netzen bereitgestellten Schnittstellen dafür - kann automatisch durchgeführt werden, irgendwann zwischen ATT-Definitionszeit und TKF-Ausführungszeit,
wobei all diese "Software-Technikalitäten" von dem erfindungsgemäßen Verfahren in beliebiger Weise in einer TKGP genutzt werden. Die von einem TLN definierten/erweiterten/modifizierten ATTs können "augenblicklich" und "weitestgehend automatisiert" der automatischen Übersetzung/Integration/Nutzung in ein/em ihnen äquivalentes/n TKGV-Management zugeführt werden.

Ein Ausführungsbeispiel der Erfindung betrifft ein Verfahren zum Verwalten technischer Kommunikationsgruppen-Vorgänge (TKGVs) mit den Schritten:
a) Bereitstellen eines treibenden Objektes, das mindestens ein weiteres, bereitzustellendes Objekt definiert;
b) Zur Verfügung stellen mindestens eines ändernden Objektes zum Bereitstellen des vom treibenden Objekt definierten weiteren Objektes;
c) Erzeugen eines Algorithmus aus dem ändernden Objekt;
d) Bereitstellen des weiteren Objektes durch Ausführen des Algorithmus.

Spezielle Ausgestaltungen der Erfindung sind in der nachfolgenden Beschreibung verdeutlicht. Dieser Sinngehalt der vorliegenden Anmeldung ermöglicht die Implementierung ihres Verfahrens und damit der Funktionalität einer TKGP auf mindestens einem Server innerhalb oder/und außerhalb eines TK-Netzes.

Die nachfolgenden Skizzen des TKGV-Managements einer TKGP gelten - in offensichtlicher Weise sinngemäß adaptiert - auch für das Management jedes anderen Objekttyps einer TKGP, sodass Objekttypen-spezifische Wiederholungen entfallen können.

### C.1. Elementare Elemente einer solchen TKGP

Objekte einer TKGP sind deren TLNs, TKGVs, ATTs, TKFs. Diese Objekte der TKGP können auf externe Informationsquellen beliebig zugreifen. Der Begriff "Teilnehmer (TLN)" steht im Sinne der vorliegenden Erfindung sowohl für einen TLN-Anschluss etwa an einem TK-Netz oder einem anderen Kommunikations-Mechanismus, ein oder mehrere Endgeräte oder Endsysteme, die an einen TLN-Anschluss angeschlossen sind, einen menschlichen TLN, der an einen TLN-Anschluss angeschlossene Endgeräte oder Endsysteme bedient, sowie für ein mittels ihm benutzten Computer-oder anderweitig unterstützten "Kommunikations-Anwendungssystem". Da es für die vorliegende Erfindung nicht darauf ankommt, zwischen einem Endgerät, das z.B. einen Anruf aussendet oder annimmt (bzw. allgemeiner: von einer TKG und/oder einem TKV in irgend einer Weise betroffen ist), dem TLN-Anschluss, an das das Endgerät angeschlossen ist, dem menschlichen TLN, der ein solches Aussenden/Annehmen (bzw. Betroffensein) veranlasst, und den in diesem TKGV involvierten Anwendungssystemen zu unterscheiden, wird eine solche Unterscheidung auch nicht vorgenommen - der Begriff des TLNs ist dementsprechend allgemein zu verstehen.

Der Begriff "technischer Kommunikations-Gruppen-Vorgang (TKGV)" steht in der vorliegenden Erfindung für eine derartige Gesamtheit von (Computern und von ihnen unterstützten) aktuellen und/oder potentiellen, insbesondere per Ausführung von TKFs bewerkstelligten, diskreten und/oder kontinuierlichen Interaktionen zwischen zwei oder mehreren TLNs und/oder deren Kommunikations-Anwendungen, dass diese ihnen eine "Informations"-Übertragung zwischen ihnen bedeutet, unabhängig davon, ob erfolgreich oder nicht, ob bereits erfolgt oder noch potentiell.

Ein TLN (ggf. auch jedes andere Objekt der TKGP) kann zu einem Zeitpunkt von einem oder mehreren TKGVs (ggf. auch von jedem anderen Objekt der TKGP) betroffen sein - wobei der intuitiv verständliche Begriff "betroffen sein" äquivalent ist dem "verknüpfbar sein"-Begriff.

Das erfindungsgemäße Verfahren kann jedem von einem TKGV betroffenen TLN ermöglichen, von der TKGP ein umfassendes Berichtssystem über diesen TKGV anzufordern, z.B. nicht nur darüber, welche TKFs für ihn tatsächlich durchgeführt wurden bzw. werden sollen, sondern ggf. auch, ob und welche weiteren - auch "illegalen" - Maßnahmen (soweit identifizierbar) von diesem TKGV verlangt und/oder durchgeführt werden/wurden, ggf. mit Alarmen unterschiedlicher Prägung arbeitend.

### C.2. Verbesserung des TKGV-Managements einer TKGP ggü. dem der TKGV-Indikatoren

Noch wichtiger als die in der Einleitung zu Abschnitt **B**. angesprochenen ersten Indikatoren zukünftiger spezieller TKGV-Dienste auf den verschiedenen TK-Netzen - vor allem unter unternehmerischen/wirtschaftlichen/geschäftlichen/beruflichen Gesichtspunkten - dürften sich die zukünftigen und viel intelligenteren TKGPs erweisen, die im Rahmen ihrer Möglichkeiten die Definition/Kreierung/Weiterentwicklung einer Vielzahl unterschiedlicher TKGVs gestatten: Im unternehmerischen/wirtschaftlichen/geschäftlichen/beruflichen Umfeld dürfte ihnen eine Bedeutung zukommen, die die der bisherigen Computer-unterstützten Organisationssysteme ergänzt (wie sie aus den Bereichen z.B. der Systeme für EnterpriseResourcePlanning/ERP, CustomerServiceManagement/CSM, AdvancedCallForwarding/ACF, InteractiveVoiceResponse/IVR bekannt sind). Die vorliegende Erfindung ist vor allem auf die Ergänzung dieser eben genannten "konventionellen" TKGV-Vorläufersysteme in vielerlei Hinsicht abgestellt. Das dabei vorgesehene Management erfindungsgemäß ergänzter TKGVs beschränkt sich keineswegs nur auf Realzeitmaßnahmen - d.h. ist nicht beschränkt auf etwa "on-line"-Übersetzungen/-Kommentierungen von Telefongesprächen - sondern kann auch vor der Realzeit eines TKGVs und/oder danach liegende/existierende Vorgänge/Objekte umfassen.

Erfindungsgemäß wird also ein Verfahren bereitgestellt, das ein Funktionssystem (im Rahmen einer identifizierbaren oder einer nicht identifizierbaren TKGP oder beider Mischform) zu bestimmen gestattet, das aus mehreren scheinbar selbständig agierenden und/oder einander aufrufenden TKFs für TKGVs besteht, wobei erstere stets durch von letzteren betroffenen TLNs funktional definiert/identifizierbar/modifizierbar sind. Die Erfindung umfasst eine Vielzahl von Varianten solcher Funktionssysteme.

### C.3. Einige Eigenschaften des hier offenbarten TKGV-Managements

Das dieser Anmeldung gemäße Management eines TKGVs einer TKGP umfasst i.d.R.
■ nicht nur das Definieren, Erzeugen, Registrieren, Abrechnen und Dokumentieren von ATTs/TKFs in jedem Augenblick für diesen TKGV,
■ sondern auch das Ausführen aller TKFs gemäß der ihnen zugrunde liegenden ATTs.

Dazu einige Erläuterungen.

Die Individualität der Spezifizierbarkeit des Managements jedes TKGVs bedeutet, dass z.B. die dazu Berechtigten etwa von dessen Originator vorgegeben sein können, wobei er diese Vorgabe aber so gestalten kann, dass ggf. auch jeder weitere von dieser/m TKG/V Betroffene diese Spezifikation hinsichtlich etwa Identitäten und/oder Bedeutungen etc. dieses TKGVs ergänzen kann.

Das Betroffensein eines Objekts der TKGP durch einen TKGV impliziert, dass ein von ihm Betroffener zwischen diesem TKGV und diesem Objekt irgend ein ATT festgelegt/definiert hat - falls er zu dieser Spezifikation befugt war - wobei dieses Objekt über ein ATT spezifiziert selektiv ein weiteres TKGP-Objekt überschreiben darf oder auch nicht.

Die Realzeit-Fähigkeit des Managements eines TKGVs bedeutet, dass jede Änderung - von wem auch immer vorgenommen - der diesen TKGV betreffenden Objekte "zeitnah", d.h. umgehend und automatisch von der TKGP in sie eingebaut wird, um so ein möglichst sofortiges Wirksamwerden dieser Änderung zu gewährleisten.

Dass der "Supervisor"/"Operator" einer TKGP einen noch weitergehenden Zugriff auf alle Objekte in dieser TKGP haben kann - wie er gesetzlich vorgeschrieben sein kann - steht hier nicht zur Diskussion. Angemerkt sei jedoch, dass die Funktionalität der nachfolgend beschriebenen Erfindung für eine TKGP ggf. gänzlich in einem TK-Netz erbracht werden kann, ggf. für mehrere TKGPs gleichzeitig mehrfach mit gleicher und/oder unterschiedlicher Management-Funktionalität - wobei dies weder ausschließt, dass diese jeweilige Funktionalität ggf. in Zusammenarbeit mit den TLNs eines TK-Netzes bzw. deren Endsystemen (i.S.d. OSI-Referenzmodells) erbracht wird, noch ausschließt, dass diese einzelnen Funktionalitäten gänzlich außerhalb eines TK-Netzes (z.B. nur von dessen Benutzern und/oder deren Endsystemen und/oder deren oder der TK-Netz Servern) erbracht werden.

Das erfindungsgemäße Verfahren ist also nicht darauf beschränkt, irgend eine seiner TKFs mittels deren Implementierung auf mindestens einem Server mindestens einer TKGP zu erbringen: Es kann die erfindungsgemäße Arbeitsweise auch erzielen, ohne eine TKGP als eigenständig identifizierbare Entität auf einem oder mehreren Servern eines oder mehrerer TK-Netze anzulegen.

### C.4. Weitere Eigenschaften der TKGPs

Wichtig ist hier wahrzunehmen, dass die Erfindung das Zustandekommen der ATTs und der TKFs nicht umfasst, sehr wohl aber dieses Zustandekommen als solches: Beide können z.B.
■ als Teile der TKGP von vorn herein vorgegeben und/oder allen oder gewissen seiner TLNs bekannt sein, und/oder
■ von einem TLN im Zuge der Benutzung der TKGP "von Hand" als ATT und/oder TKF bereitgestellt und in die TKGP integriert werden, oder
■ mittels irgendwelcher "automatischen" Übersetzer (z.B. "Compiler"/"Linker"/...) aus den der TKGP bereits bekannten ATTs und/oder TKFs, die für diesen Zweck zur Verfügung stehen, erzeugt und in die TKGP integriert werden.
In den beiden Varianten, die die "dynamische" TKF-Bereitstellung ermöglichen, muss die TKGP geeignete "Schnittstellen" zur Verfügung stellen und imstande sein, die diese beachtenden TKFs jedweder Herkunft in zeitnah ausführbarer Weise einzubinden.

### C.5. Außen-Bezüge einer/s TKGP/TKGVs

Erfindungsgemäß können ATTs/TKFs Informationen von außerhalb der TKGP in jedweder beliebigen Weise benutzen, etwa von anderen Datenbanken (wie derzeit z.B. Google) oder von spontanen und ggf. nur temporären Informationsquellen, o.Ä.

### C.6. Durch eine TKGP verkörperte Innovationen

Diesen - bisher nur technische Eigenschaften der Erfindung beschreibenden - Abschnitt abschließend wird nochmals betont, dass das erfindungsgemäße Verfahren den/die TLN-gesteuerte/n automatisierte/n Aufbau/Modifikation von TKGVs bzw. von deren TKFs gestattet. Diese automatisierten Maßnahmen hängen ab vom jeweiligen Stand der Technik hinsichtlich des Ziels der Realzeit-nahen Implementierung der Formulierung/Übersetzung/Integration von ATTs/TKFs für/in eine TKGP.

Programmiersprachen und Übersetzer/Interpreter/Linker/Debugger, wie der Stand der Technik hinsichtlich Datenbank-Konzepten - die beide bei jeder Implementierung einer TKGP und deren Objekten zum Einsatz kommen - sind dem maßgeblichen Fachmann der Technik des Software-Engineering bekannt. Andererseits ist dem maßgeblichen Fachmann der TK-Technik bekannt, dass es für jedes TK-Netz ein Netzwerkmanagement-System gibt, das dessen Betriebsmitteleinsatz/- nutzung und die Kostenberechnung für die damit realisierten klassischen Verbindungen bzw. TKFs aller Art zu verwalten gestattet.

Auf der Grundlage dieses bekannten Standes der Technik, sowohl beim Software-Engineering als auch bei der klassischen Telekommunikation, besteht eine Innovation des erfindungsgemäßen Verfahrens darin, diese beiden Techniken hochgradig integriert zu nutzen, um -was völlig neu ist-
■ für/auf mindestens ein/em TK-Netz
■ eine TKGP (oder mehrere, möglicherweise ganz unterschiedliche TKGPs)
■ einsetzen und jederzeit fortschreiben zu können,
wobei jede TKGP eine Vielzahl von TKGVs enthalten kann
■ sowohl neuartiger Komplexität (etwa "Gruppen-TKGVs")
■ als auch neuartiger Eigenschaften (etwa "hochgradig gestaltbare TKGVs"),
■ als auch beider neuer Arten, wobei diese durch die jeweiligen "inhaltlichen Strukturen" der ATTs definiert sind
und dabei jeden ihrer TKGVs
■ im Sinne der von ihm betroffenen TLNs managen und diesen darüber berichten kann - wie es diese TLNs mittels der Attribute dieses TKGVs spezifiziert haben - wobei
   ○ jeder solche betroffene TLN seine individuellen Management-/Berichtswünsche hinsichtlich dieses TKGVs jederzeit ändern kann (durch Änderung von dessen ATTs/TKFs) und
   ○ eine solche Änderung (durch einen TLN) Realzeit-nah von der TKGP verwirklicht und dann von ihr praktiziert werden kann.

Das erfindungsgemäße Verfahren beginnt stets mit einer "Basis-TKGP" - möglicherweise bereits mit anfänglichen Objekten aller Art - wobei deren Anzahl während des Betriebs der TKGP i.d.R. TLN-gesteuert
■ anfänglich wächst und dann schwanken kann und
■ einhergeht mit einem Wachsen/Schwanken der Anzahl von deren ATTs/TKFs
und diese Erweiterungen der TKGP auch Erweiterungen von deren möglichen Mengen von Objektunterstützenden Symbolen, Werten, Programmen, usw. und deren Zuordnungen zueinander umfassen können.

### D. Weitergehende Beschreibung der Erfindung und Beispiel-ATTs

Das erfindungsgemäße Verfahren erfordert, dass ein TLN z.B. für einen TKGV u.A. festlegt,
■ unter welchen Umständen er mit diesem verknüpfbar (alias: von diesem betroffen) sein kann - der TLN also mit diesem TKGV verknüpft ist - und
■ was - im Falle seines "Verknüpftseins" mit diesem TKGV - dieser TLN für eine Modifikation z.B. in der Ausführung der TKFs des TKGVs anfordert.

Dieser Abschnitt **D**. erläutert einige fundamentale Aspekte, die bei diesen Festlegungen zu bedenken sind. Da diese Aspekte von TKGP zu TKGP, und bei jeder TKGP in ihren verschiedenen Anwendungen voneinander ganz unterschiedlich sein können, kann diese Erläuterung in keiner Weise den Schutzbereich des erfindungsgemäßen Verfahrens erschöpfend darstellen - sondern nur auf einige wenige seiner Facetten hinweisen.

Es gibt im erfindungsgemäßen Verfahren implizit vorausgesetzte und explizit festgelegte Verfahrensschritte unterschiedlicher Arten: Letztere zur Definition/Modifikation der auszuführenden bzw. gerade ausgeführten Objekte der TKGP, erstere zur nebenläufigen Weiterführung der von dieser Definition/Modifikation nicht erfassten Objekte der TKGP. Sie alle erfolgen für jeden TKGV und für jeden von ihm betroffenen TLN sequentiell und i.d.R. während der Lebensdauer eines TKGVs zeitlich mehrfach. Dabei wird jede Maßnahme, die einem solchen Verfahrensschritt entspricht, aus Sicht des mindestens einen TLNs so realisiert, dass während ihrer Ausführung für diesen mindestens einen TKGV und/oder mindestens einen TLN alle dessen/deren ATTs von anderen schrittweisen Ausführungen nebenläufiger Maßnahmen anderer TLNs unbeeinträchtigt bleiben.

Diese Anmerkung soll bewusst machen, dass - obwohl das Ausführen dieser TKGP Objekte für/in mindestens einen/m TKGV insgesamt offensichtlich kein sequentieller Vorgang ist, sondern i.d.R. und u.A. aus einer Vielzahl von zeitlich einander überlappenden (= "nebenläufigen") "Punkt-zu-Punkt-Datenübertragungen und den zugehörigen Datenmanipulationen" besteht,
■ sowohl für sein "originäres Kommunikationsverfahren" seiner möglicherweise mehreren/vielen TLNs
■ als auch für seine bereits wirksamen "Managementverfahren" sowohl für diese TLNs als auch andere von diesem TKGV betroffene, jedoch nicht an seinem "originären Kommunikationsverfahren" direkt partizipierenden TLNs
■ als auch für die Modifikations-Maßnahmen dieser TKGP Objekte - für jeden dieser TLNs die Ausführung seiner anspruchsgemäßen "Definitions-/Modifikations-Maßnahme" ein deterministischer einheitlicher Vorgang ist. Damit ist nicht ausgeschlossen, dass z.B. so definierte/modifizierte ATTs/TKFs dieses TKGVs womöglich kurz danach von einem weiteren von ihm betroffenen TLN anders verändert werden, als von ersterem TLN in seiner für ihn soeben ausgeführten "Modifikations-Maßnahme": Der erstere TLN muss dies beim Festlegen seiner "Modifikations-Maßnahme" für diesen TKGV von vorn herein versuchen geeignet zu berücksichtigen bzw. ggf. zu unterbinden - wobei ihn eine geeignet konzipierte TKGP wesentlich unterstützen kann.

Angemerkt sei auch, dass der im vorigen Absatz angesprochene TGKV schon allein mit nur seinen "originären" Kommunikationsfunktionen selbst - auf Grund der Vielzahl und möglichen grundsätzlichen Unterschiedlichkeit dieser "originären" Funktionen, die für ihn nebenläufig ausführbar sind - insgesamt kein sequentieller Vorgang zu sein braucht, also auch nicht die von ihm verursachten Datenübertragungen. Das im vorigen Absatz erläuterte Festlegen durch einen TLN seiner "Modifikations-Maßnahme" für einen ihn betreffenden TGKV kann dessen nebenläufige Funktionen adressieren und darauf abstellen oder auch nicht - was in letzterem Fall i.d.R. die Undeterminiertheit der Auswirkungen dieses Festlegens von "Modifikations-Maßnahmen" für diesen TGKV hinsichtlich dessen nebenläufiger Funktionen bewirken kann.

Aus der Untergliederung eines Anspruchswortlauts in Merkmale darf im Übrigen nicht abgeleitet werden, dass bei der Definition/Modifikation eines TKGVs durch einen TLN die dortigen abstrakten Verfahrensschritte in einer erfindungsgemäßen TKGP als konkrete Einzelschritte an irgend einer Stelle in Erscheinung zu treten hätten.

Nachfolgend wird auf vier beispielhafte Typen von Festlegungen für jedes Objekt der TKGP per Attributierung hingewiesen, die für ein Objekt teilweise unverzichtbar sind (siehe unten), wobei die TKGP die Zuordnung dieser Festlegungen zu den jeweiligen Objekten während deren Betrachtungsdauer selbsttätig aufrechterhält. Zu jedem dieser vier ATT-Typen kann es wiederum eine Vielzahl konkreter Ausprägungen geben, selbst in jeder einzelnen konkreten Ausprägung einer TKGP - von denen es wiederum mehrere ganz unterschiedliche geben kann. Ihrem Wesen nach muss aber jede anspruchsgemäße TKGP diese vier Festlegungstypen auf die eine oder andere Weise entweder von vorn herein selbst realisieren oder den TLNs ermöglichen, sie dynamisch per ATTs zu definieren und von der TKGP in TKFs übersetzen und in die TKGP integrieren lassen.

Bevor diese vier beispielhaften ATT-Typen nachfolgend erläutert werden, wird für sie - um zu zeigen, wie flexibel einsetzbar die vorliegende Erfindung ist - beispielsweise die folgende, sehr einfache, Struktur festgelegt: Wie bereits im Abschnitt **C**. dieser Druckschrift erläutert, ist ein ATT ein logischer Ausdruck in einer zu seiner Definition von der TKGP vorgegebenen Programmiersprache, dessen einzelne Terme entweder Terme dieser Programmiersprache sind oder "Basis-ATTs", wobei letztere die Gestalt haben "ATT-Name = xxx". Eine TKGP kennt ständig eine Menge von "ATT-Namen" und für jeden von ihnen eine Menge von Werten "xxx", für die diese Basis-ATTs zu "wahr" evaluieren. Beide Mengen können teilweise TLN-definiert sein und sind im übrigen von der TKGP vorgegeben.
**(1)** Eigen-Attributieren eines TKGVs durch einen dazu befugten TLN zum Zwecke seiner Selbstbeschreibung für andere Objekte der TKGP und nur gültig unter den in diesen Eigen-ATTs festgelegten Umständen. Ein Eigen-ATT (alias Identifizierungs-ATT, alias Objekt-Identifizierungs-ATT) des TKGVs kann - falls z.B. sein Originator oder Initiator dies zulässt - auch durch weitere von diesem TKGV betroffene Objekte weiterentwickelt werden. Ein solches ein Objekt (wie ein TLN-Objekt) dazu befähigendes Eigen-ATT eines TKGVs kann diesem z.B. (um nur 3 Varianten aufzuzeigen) mitgegeben werden von:
   1. der TKGP für alle ihre Objekte oder
   2. einem für diesen TKGV von der TKGP befugten speziellen TLN (etwa den Initiator dieses TKGVs) oder
   3. wie 2., wobei jedoch dieser speziell befugte TLN alle Betroffenen dieses TKGVs in dessen Eigen-ATT potentiell dazu befähigt,
   wobei in allen drei Beispiels-Fällen vom attributierenden Objekt ggf. auch festgelegt werden kann, wann und/oder unter welchen weiteren Bedingungen diese Weiterentwicklung dieses Eigen-Attributs des ersten TKGVs für welches Objekt gültig sein soll.
**(2)** Relations-Attributieren eines TKGVs durch einen dazu befugten TLN (wie in (1)), zum Zwecke seiner Verknüpfungs-Beschreibung mit mindestens einem anderen Objekt und nur gültig unter - bei dieser Relations-Attributierung - festgelegten Umständen. Dieses TKGV-Relations-ATT kann - falls dessen Originator oder Initiator oder ... dies nicht ausschließt - wie in (1) auch durch weitere von diesem TKGV betroffene Objekte weiterentwickelt werden.

Man beachte, dass diese beiden Arten von ATTs (eines TKGVs) selbst noch keinerlei Implikation haben hinsichtlich seiner operativen (alias Datenmanipulations-/-übertragungs-) und/oder Berichts-Maßnahmen, die nachfolgend (3) und (4) erläutern: Sie beschränken sich nämlich auf die "verknüpfbar-/verknüpft-sein"-Beschreibungen der Objekte der TKGP, möglicherweise auch hinsichtlich solcher Aspekte, welche TLNs unter welchen Umständen von diesem TKGV wissen dürfen und/oder sollen bzw. welche Kompetenzen hinsichtlich ATTs/TKFs dieser TKGV besitzt bzw. erfordert. D.h.: Selbst wenn Eigen-/Relations-ATTs/TKFs operative ATTs/TKFs involvieren, beschränken sie sich auf die Nutzung deren deskriptiver Aspekte zur Eigen-Beschreibung und "verknüpfbar-/verknüpft-sein"-Beschreibung - nicht jedoch zur Beschreibung der Definition/Modifikation der von der TKGP zukünftig/aktuell praktizierten Datenmanipulationen/-übertragungen dieses TKGVs.

Die Beschreibung der Bedingungen und der Wirkungen der Evaluation bzw. Ausführung mindestens eines/r ATTs/TKF für einen TKGV bzw. für ein von diesem betroffenes Objekt wird nachfolgend skizziert, ebenso wie die dabei auftretende Frage nach dem Verhältnis zwischen ATTs und TKFs.
**(3)** Operations-Attributieren eines TKGVs durch einen dazu befugten TLN (wie in (1) und/oder (2)) zum Zwecke der Definition/Modifikation mindestens einer TKF für den bzw. des TKGVs und für diesen TLN mittels deren Ausführung, wobei dieses/diese ATT/TKF nur gültig ist unter - als Teil dieser Operations-ATTs - festgelegten Umständen. Dieses Operations-ATT des TKGVs für einen TLN kann - falls dies z.B. deren ATTs durch ihre Originatoren oder Initiatoren oder ... nicht ausschließen - wie in (1) und/oder (2) auch durch weitere etwa von diesem TKGV betroffene Objekte weiterentwickelt werden.
**(4)** Dokumentations&Report-Attributieren eines TKVs durch einen dazu befugten TLN (wie in (3)) zum Zwecke der Modifikation des Dokumentierens&Reportings aller Aktivitäten hinsichtlich der ATT-Definition-/Modifikations- und Daten-Übertragungs-/-Manipulations-Verfahren des TKGVs, etwa für diesen TLN mittels mindestens eines/einer ATTs/TKF, wobei dieses/diese nur gültig ist unter - als Teil dieser Aufgaben-spezifischen Attributierung - festgelegten Umständen. Diese Dokumentieren&Reporting-ATTs des TKGVs für einen TLN können - falls dies z.B. deren Relations-Attributierungen durch ihre Originatoren oder Initiatoren nicht ausschließen - wie in (3) auch durch weitere von diesem TKGV betroffene Objekte weiterentwickelt werden.
Zu diesen "operativen ATTs" in (3) und (4) ist zunächst einmal anzumerken, dass die für sie von der TKGP automatisch erzeugten und in sie integrierten - mindestens jeweils einen - TKFs
■ sowohl mindestens einen neuen TKGV für ein Objekt der TKGP erzeugen können - wenn das/die ihm/ihnen zugrunde liegende/n ATT/s dies vorsieht/sehen - der i.d.R. aber mit der Datenübertragung dieses Objekts zusammenhängt, wie es der nachfolgende Unterpunkt beschreibt,
■ als auch die Datenübertragung dieses Objekts und/oder dieses weiteren TKGVs (des vorstehenden Unterpunktes) in jeder Hinsicht beliebig manipulieren können, nämlich so, wie das/die ihm/ihnen zugrunde liegende/n ATT/s vorsieht/sehen.
Auch hier wird nochmals darauf hingewiesen, dass es hoch entwickelte Programmiersprachen - und für sie Compiler/Interpreter/Linker/etc. - gibt, die beliebig komplizierte solche ATTs zu schreiben und deren TKFs in eine TKGP zu integrieren gestatten. Die Entwicklung solcher ATTs für eine TKGP kann Routine-Arbeit auf der Grundlage des Standes der Technik der TK und des Software-Engineerings sein. Dem einschlägigen Fachmann ist dies bekannt, wie z.B. auch in der US 7,069,259 B2 (siehe Abschnitt B.7. der vorliegenden Druckschrift) dargelegt. Aber die vorangehende Klärung der Existenz dieser vier inhaltlich grundsätzlich verschiedenen Arten von ATTs für eine konkrete TKGP oder einen ihrer konkreten TKGVs braucht nichts hinsichtlich deren Gesamt-Präsentation an der Benutzeroberfläche zu bedeuten, also
■ weder braucht es dort überhaupt alle vier ATT-Arten explizit zu geben,
■ noch brauchen deren ATTs/TKFs jeweils nur eine dieser vier Funktionalitäten zu repräsentieren - jedes/jede ATT/TKF kann alle vier Funktionalitäten miteinander "vermengen".

Aus der (fast) synonymen Benutzung der Begriffe/Termini ATT und TKF geht bereits hervor, dass sie für das erfindungsgemäße Verfahren letztendlich für das Gleiche stehen: Beide
■ müssen, einerseits, um in dem erfindungsgemäßen Verfahren wirksam werden zu können, von der TKGP in ausführbaren Code ihres Computersystems übersetzbar sein (falls dies nicht bereits geschehen ist) und in deren bereits vorhandenen ausführbaren Code integrierbar sein, und
■ repräsentieren, andererseits, ihre identische Funktionalität auf unterschiedlichen Abstraktionsebenen,
   ○ ATTs auf einer an der Benutzeroberfläche einer TKGP irgendwie definierten aber i.d.R. nicht-prozeduralen, also deskriptiven/deklarativen, und
   ○ TKFs auf einer TKGP-Implementierungs-internen irgendwie definierten aber prozeduralen, also exekutiven,
Abstraktions-Ebene.

Die nachfolgenden Beschreibungen des erfindungsgemäßen Verfahrens unterscheiden aus Vereinfachungsgründen häufig nicht zwischen den Darstellungen der ATTs/TKFs auf den verschiedenen Abstraktionsebenen, z.B. der der Benutzeroberfläche einer konkreten TKGP und denen in deren Implementierung - sodass nachfolgend meistens nur noch von den ATTs gesprochen wird (weil diese ja den sie implementierenden TKFs innewohnen). Dies bedeutet nicht, das erfindungsgemäße Verfahren ließe keine TKFs für eine TKGP zu - von wem auch immer sie bereitgestellt/definiert/generiert/integriert seien - zu denen es überhaupt kein ATT gibt (z.B. weil das Programmieren einer TKF einfacher ist, als das Schreiben eines ihr äquivalenten ATTs, oder auf der Abstraktionsebene der ATTs die von der TKF zu realisierende Funktion überhaupt nicht beschreibbar ist).

Diese ganz grundsätzlichen Ausführungen zum erfindungsgemäßen "TKF-Definitions-/Modifikationsverfahren" einer TKGP werden ergänzt durch eine kurze Erläuterung der Einordnung des erfindungsgemäßen Verfahrens in das OSI-Referenzmodell: Es kann - und dies ist abhängig von der Funktionalität seines/r jeweils betrachteten ATTs - jeder der 7 Schichten des OSI-Referenzmodells zuordenbar sein, ggf. mehreren von ihnen gleichzeitig, jedoch stets deren Managementbereich. Eine wichtige Folgerung aus dieser Erkenntnis ist, dass es nicht auf die Datenübertragungsverfahren der TKGP von "Nutzdaten" o.Ä. in einem TKGV beschränkt ist, sondern der Anspruchswortlaut/-sinngehalt dieser Anmeldung ganz klar alle Datenübertragungen der TKGP betrachtet.

Diese grundsätzlichen Ausführungen zur TKGP-"Arbeitsweise" werden nun etwas elaboriert.

Zunächst einmal wird angemerkt, dass diese Arbeitsweise einer TKGP gestattet, für einen betrachteten TLN hinsichtlich eines betrachteten TKGVs
■ nicht nur manifeste (im Sinne von: "von jedem von dem TKGV Betroffenen ständig erkennbare") Objekt-spezifische Management-Maßnahmen festzulegen,
■ sondern auch (teil-) transparente (im Sinne von: "nur von bevorzugten dieser Betroffenen und/oder nur zeitweise erkennbar") solche Management-Maßnahmen.
Ein TLN kann damit z.B. für einen TKGV hinsichtlich seiner Identität Festlegungen so treffen, dass seine Anonymität zeitweise oder permanent und/oder gegenüber gewissen oder allen Objekten gewahrt bleibt.

Hinsichtlich dieser ATTs wird nochmals betont, dass alle Beschreibungen irgendeiner ihrer Organisation bzw. ihrer Zuordnung zu Objekten einer TKGP in dieser Druckschrift lediglich beispielhaften Charakter haben. Die Merkmale der Ansprüche sind hinsichtlich der Attribute/Attributierung frei von jedweder Beschränkung - abgesehen von deren dort explizit formulierten Beschränkungen.

Die Abwicklung des erfindungsgemäßen Verfahrens in einer TKGP besteht im Prinzip aus vier Arten von funktionalen - d.h. Implementierungs-unabhängigen - Maßnahmen hinsichtlich ihrer aktuellen Objekte:
■ Zum ersten der verfahrensinhärenten (sozusagen "selbsttätigen") Aktualisierung und Evaluierung aller ATTs der TKGP (die per erfindungsgemäßem Verfahren - bei seiner anfänglichen funktionalen Spezifikation oder deren späterer Modifikation - festgelegt wurden, ggf. zu diesen Spezifikation-/Modifikationen-gemäßen Zeitpunkten),
■ zum zweiten der ggf. vorzunehmenden Freigabe bzw. Nicht-Unterbindung jeder von einem Objekt angeforderten Ausführung einer TKF, falls diese Freigabe bzw. Nicht-Unterbindung sich als durch ein ATT vorgeschrieben erweist,
■ zum dritten im Unterbinden der (von wem auch immer) angeforderten Ausführung einer in der TKGP definierten oder nichtdefinierten TKF zu einem Zeitpunkt für/an ein/em Objekt und/oder einem von dessen Datenübertragungsverfahren, die per erfindungsgemäßem Verfahren - bei der anfänglichen funktionalen Spezifikation oder deren späterer Modifikation - zu diesem Zeitpunkt nicht dafür als zulässig spezifiziert wurde,
■ und viertens im Protokollieren/Dokumentieren/Berichten für/an einen TLN, möglicherweise in allen drei vorgenannten Fällen über alle involvierten Objekte, ebenso wie weiterer sinnvoller Hinweise auf deren mögliche Identität/Absichten/Interessenten/Auftraggeber/etc..

In den nachfolgenden Absätzen wird eine beispielhafte Attributierung einer Anwendung des erfindungsgemäßen Verfahrens skizziert - wobei selbst diese Skizzen nur bruchstückartig sind.

Jedes Objekt erhält in dieser beispielhaften Attributierung bei seinem Initiieren in der TKGP, und behält während seiner Existenz darin und ggf. darüber hinausgehend, die beiden es unter allen Umständen eindeutig identifizierenden ATTs namens "Obj-Id" und "ObjTyp-Id". Sie können in selbsterklärenden logischen Ausdrücken etwa der Form "Obj-Id = +49 30 399 28 xx" oder "ObjTyp-Id = XXX" verwandt werden (wobei der letztere i.d.R. nur für einen der XXX-Werte TLN, TKGV oder ATT/TKF zu "ja" evaluieren kann, der erstere für alle die gegenwärtige zentrale Telefon-Nummer der TELES ergänzenden Werte von xx, wie etwa 00 oder 277 etc.).

Jedes Objekt kann in diesem Attributierungs-Beispiel während seiner Existenz in der TKGP i.d.R. dynamisch mit weiteren ATTs - zusätzlich zu seinen beiden a priori Obj-/Typ-Id-ATTs - versehen bzw. von ihnen befreit werden. Ein ATT ist dabei, wie oben bereits skizziert:
■ entweder "eigenspezifisch", d.h. es beschreibt ein Merkmal seines Träger-Objekts, wobei die beiden augenfälligen und unveränderlichen Objekt-Merkmale das "Obj-Id"-ATT und das "ObjTyp-Id"-ATT sind. Im Allgemeinen kann der logische Ausdruck eines solchen "Eigen-Attributs" jedoch neben diesen beiden Merkmalen seines Träger-Objekts auch Merkmale und/oder ATTs anderer Objekte und der TKGP enthalten und sich zeitlich ändern. Jedoch gilt der logische Ausdruck eines Eigen-Attributs in jedem Falle nur hinsichtlich der Referenzierbarkeit seines Träger-Objekts in anderen logischen Ausdrücken, insbesondere in "Relations-Attributen" anderer Objekte. Ist für ein Objekt die Validierung eines Eigen-Attributs in einer logischen Formel zu einem Zeitpunkt nicht möglich, so ist diese logischen Formel in ihrer Gesamtheit zu diesem Zeitpunkt ungültig.
■ oder "beziehungsspezifisch", d.h. es beschreibt die Verknüpfbarkeit/-ung seines Träger-Objekts und dessen ATTs zu einem Zeitpunkt mit einem anderen Objekt und dessen ATTs zu diesem Zeitpunkt - ggf. unter zu Hilfenahme von weiteren ATTs der TKGP - und heißt dementsprechend "Relations-Attribut". Statt von "verknüpfbar sein" wird häufig auch von "betreffen" gesprochen.

Ein Relations-ATT eines Objektes ist - in dem hier betrachteten Beispiel - ein logischer Ausdruck aus ATTs, der mindestens ein Eigen-ATT mindestens eines anderen Objektes beinhaltet. Dieses andere Objekt ist mit dem ersten Objekt vermöge dieses Relations-ATTs immer verknüpfbar und zu einem Zeitpunkt verknüpft, wenn dieses Eigen-ATT darin zu diesem Zeitpunkt den Wert "wahr" hat. Welche Objekte in einer TKGP (zu einem Zeitpunkt T1) welche anderen Objekte darin betreffen (= welche Objekte miteinander verknüpfbar sind) bzw. aktuell miteinander verknüpft sind, kann in dem von einem 3-dimensionalen rechtwinkligen Koordinatensystem aufgespannten Raum leicht veranschaulicht werden: Seine Achsen mögen X, Y und Z heißen, und betrachtet werden darin nur "GitterPunkte" mit ganzzahligen Koordinaten-Tripeln (Xi,Yj,Zk).
■ Da die Menge der Objekte dieser TKGP abzählbar ist, können wir sie in irgend einer Reihenfolge anordnen und diese Reihenfolge sowohl auf die Punkte X1/X2/... als auch Y1/Y2/... der X- und Y-Achsen legen. Wenn ein Objekt Xi ein Objekt Yj betrifft - mit ihm verknüpfbar ist - soll der Gitterpunkt (Xi,Yj,0) mit einem "Ja" versehen werden.
■ Um systematisch entscheiden zu können, welche Relations-ATTs dies bewerkstelligen, werden die abzählbar vielen Relations-ATTs der TKGP in irgend eine Reihenfolge gebracht, und diese wird auf die Punkte Z1/Z2/... der Z-Achse gelegt, wobei die Relations-ATTs eines Xi hinsichtlich eines Yj auf der Z-Achse in beliebiger Reihenfolge aber konsekutiv aufgereiht sein mögen.

Für jedes Objekt Xi gibt es dann hinsichtlich Yj ein "niedrigstes" Zk, das einem Relations-ATT von Objekt Xi hinsichtlich Yj entspricht (unabhängig von der Betrachtung der Validität der Eigen-ATTs von Xi und Yj).

Für die Evaluation des Relations-ATTs Zk zum Zeitpunkt T1 hinsichtlich der Objekte Xi und Yj ist nun von deren Eigen-ATTs in Zk zu klären, ob ersteres mit Hilfe letzterer zu "wahr" reduziert werden kann. In diesem Fall ist der Gitterpunkt (Xi,Yj,Zk) mit "Ja" zu versehen, andernfalls ist - falls Objekt Xi noch ein auf Z höher liegendes Relations-ATT hinsichtlich Yj hat - das nächst höhere derartige Relations-ATT Zm zu wählen, und (weiterhin zum Zeitpunkt T1) dessen Möglichkeit der "wahr"-Reduzierung mittels der Eigen-ATTs von Xi und Yj in Zm zu klären, u.s.w.. Man beachte, dass die "wahr"-Reduzierung von Zk bzw. Zm auch aus anderen Gründen scheitern kann, z.B. weil andere Bestandteile dieser beiden logischen Ausdrücke (zum Zeitpunkt T1) nicht definiert sind.

Vier Anmerkungen - zu ATTs und der mit ihrer Hilfe definierbaren "betreffen"-/"verknüpfbar sein"-Relation zwischen den TKGP Objekten - verdeutlichen eine mögliche Arbeitsweise eines ATTbasierten Adressierungs-/Assoziierungs-Mechanismus einer TKGP:
■ ATTs können "redundant" sein (z.B. kann ein Relations-ATT von Xi mit mehreren Eigen-ATTs von Yj "matchen" und mit mehreren Eigen-ATTs Xk, deren Relations-ATTs ihrerseits mit Yj matchen) - Xi betrifft dann Yj auf mehrfach redundante Weise - brauchen aber keineswegs "symmetrisch" zu sein (aus "Xi betrifft Yj" braucht nicht zu folgen "Yj betrifft Xi", kann aber).
■ Eigen-ATTs eines Objektes können dessen (ggf. temporäre) "Innen-Befindlichkeit" hinsichtlich seiner Offenheit gegenüber externen Assoziations-Versuchen widerspiegeln - sie praktizieren diese Offenheit aber nicht aktiv sondern völlig passiv, indem sie sich in Relations-Attributen involvieren lassen oder auch nicht.
■ Relations-ATTs eines Objekts können dessen aktive "Partnersuche-Befindlichkeit" widerspiegeln, seine Eigen-ATTs seine passive "Partnerakzeptanz-Struktur".
■ Neben den Objekt-gebundenen ATTs kann eine TKGP eigenständige, sozusagen "freischwebende", ATT-/TKF-Objekte enthalten, die - um sie in ihr dynamisch wirksam zu machen - von "treibenden" Objekten (siehe Anspruch 1) in deren Identifikationen/Definitionen erst "Träger"-Objekten zugewiesen werden müssen.

Dieser erfindungsgemäße Adressierungs-/Assoziierungs-Mechanismus der Objekte einer TKGP untereinander gestattet dieser sicherzustellen, dass ihre TKGVs sich "vorschriftsmäßig" verhalten bzw. gemanaged werden - d.h. wie diese von den "treibenden" Objekten festgelegten Vorschriften (siehe die Anspruchswortlaute) mittels des erfindungsgemäßen Verfahrens bei der Modifikation der anfänglichen TKGP realisiert werden.

Dieses eben erläuterte fundamentale Prinzip der vorliegenden Erfindung wird nachfolgend beispielhaft etwas weitergehend konkretisiert, um die Anschaulichkeit dieses Prinzips zu erhöhen - also nur bruchstückhaft: Die meisten realistischen Anwendungen des erfindungsgemäßen Verfahrens dürften technisch, also nicht an der Benutzeroberfläche, sehr viel komplizierter ausfallen als nachfolgend aufgezeigt, jedenfalls ist es für wesentlich komplexere TKGPs gedacht: Hier soll lediglich verdeutlicht werden, welche Inhalte die Eigen-ATTs und die Relations-ATTs der beispielhaften Objekte TLN, TKGV, ATT und TKF einer TKGP zum Gegenstand haben können - wobei schon allein die Begriffe "Eigen- und Relations-Attribute" nur beispielhafte Hilfsmittel der Realisierung des erfindungsgemäßen Verfahrens aufweisen (wie an mehreren Stellen dieser Druckschrift bereits wiederholt klargestellt).
■ Ein Eigen-ATT eines TLNs kann beispielsweise dessen "TLN-Id" sein, oder dessen Rufnummer in einem TK-Netz, oder dessen Kontonummer bei einer Bank, oder dessen Initiierungs-Zeitpunkt in der TKGP, oder dessen Adresse in einer Stadt, oder dessen Alter, Schulbildung, oder dessen Körpertemperatur am Morgen, dessen berufliche Position, usw., aber auch das Verhältnis dieses TLNs zu genau diesen aktuellen Merkmalen der Eigen-ATTs anderer Objekte, aber auch das Verhältnis dieses TLNs zu Relations-ATTs irgend welcher anderer TLNs.
■ Ein Eigen-ATT eines TKGVs ist beispielsweise dessen "TKGV-Id", oder ein Betriebsmittelmodell der zu seiner Realisierung benötigten Betriebsmittel bei gewünschter Qualität des TKGVs, oder ein von ihm praktiziertes Kostenverteilungsmodell der von ihm verursachten Kosten bei Inanspruchnahme dieser Betriebsmittel, oder dessen eingeschränkte Leistungsfähigkeit, oder dessen Unwillen der Unterstützung gewisser Themendiskussionen, oder sein Realzeit-Übersetzer-Erfordernis bei Teilnahme gewisser Ausländer, usw. aber auch seine Verhältnisse zu Relations-ATTs aller Art anderer Objekte.
■ Ein Eigen-ATT einer TKF beschreibt beispielsweise die von ihr beherrschten Input/Output-Schnittstellen auf den jeweiligen Qualitätsniveaus, aber auch ihre Verhältnisse zu Relations-und/oder Eigen-ATTs aller Art anderer Objekte.
■ Ein Eigen-ATT eines ATTs ist beispielsweise eine ATT-Id, ein Name, ein Wertebereich oder seine Vererbbarkeit.
■ Ein Relations-ATT eines TLNs stellt beispielsweise eine Relation dieses TLNs zu einem/mehreren
   ○ TKGV/s, etwa dessen/deren Originator/en und/oder aktuell bzw. potentiell Betroffenen und/oder differenzierten Kostenträgern und/oder Prämienempfängern und/oder Marketing-/Rechts-/Gewährleistungs-Verantwortlichen, usw.,
   ○ TKF/s, etwa dessen/deren Datenmanipulation-/-übertragungs-Funktionalitäten und/oder Originator/en und/oder aktuell bzw. potentiell Betroffenen usw.,
   ○ TLN/s, etwa dessen/deren Interessen, Kompetenzen, Alter, usw.,
   ○ ATT/s, etwa dessen/deren Wertebereich, Änderbarkeit, Zeitpunkt der letzten Änderung, usw. dar.
■ Ein Relations-ATT eines TKGVs stellt beispielsweise eine Relation dieses TKGVs zu einem/mehreren
   ○ TKGV/s, etwa dessen/deren Originator/en und/oder aktuell bzw. potentiell Betroffenen und/oder differenzierten Kostenträgern und/oder Prämienempfängern und/oder Marketing-/Rechts-/Gewährleistungs-Verantwortlichen, usw., dar.
■ Ein Relations-ATT eines TKFs stellt beispielsweise eine Relation dieses TKFs zu einem/mehreren
   ○ TLN/s, etwa dessen/deren Fähigkeit, den Dienst des TKFs ohne weitere Hilfsmittel in Anspruch zu nehmen, usw., dar.
Nochmals: Diese möglicherweise tatsächlich beachtliche implementierungstechnische Komplexität der ATTs/TKFs der Objekte einer TKGP und/oder einer auf ihr angesiedelten Anwendung wird an deren Benutzeroberfläche i.d.R. ganz anders in Erscheinung treten - nämlich als naheliegende und völlig triviale "Auszeichnung" dieser Objekte, wie man sie etwa von Textverarbeitungssystemen oder Präsentationssprachen/-systemen kennt.

Die Zuordnung von ATTs zu betrachteten Objekten einer Anwendung auf einer TKGP, d.h. das "Attributieren" der TKGP-Objekte der letzteren, kann - ebenso wie die Veränderung dieser Zuordnung und/oder der Änderung der ATTs, also die Ausführung des erfindungsgemäßen Verfahrens der Änderung der Arbeitsweise der TKGP, auf Veranlassung eines ihrer "treibenden" Objekte (das selbst ein TLN der TKGP ist oder von einem solchen TLN kontrolliert ist in dem Sinne, dass es von einem TLN instanziiert und seither nicht geändert wurde und diese "Treiben"-Befugnis der Änderung der TKGP von diesem TLN ererbt hat, sodass dieser TLN also für eine Ausführung des erfindungsgemäßen Verfahren mittels dieses "treibenden" Objekts verantwortlich ist) - beliebig flexibel erfolgen, beispielsweise
■ zu den nachfolgend skizzierten Identifikations-/Definitionsvornahme-Zeitpunkten:
   ○ Zur Definitions-/Entwicklungszeit dieser Anwendung,
   ○zu ihrem Instanziierungs- oder Inkarnations-Zeitpunkt,
   ○ während ihrer Ausführung zu von ihr dafür vorgesehenen Zeitpunkten, ggf.
   ○ schon zum Zeitpunkt der Definition der TKGP auf der sie angesiedelt ist - d.h. eine TKGP kann etwa die jederzeitige Ausführung des erfindungsgemäßen Verfahrens für eine auf ihr angesiedelte Anwendung gestatten, für alle oder spezifische Objekte der TKGP oder dieser Anwendung,
und
■ hinsichtlich der Wirksamwerdens-Zeitpunkte dieser Änderungsvornahme: Etwa
   ○ sofort, etwa bei Beginn oder bei Beendigung durch die TKGP der Änderungsvornahme,
   ○ später, also nach der Änderungsvornahme, etwa bei Beginn oder bei Beendigung durch die TKGP der Überprüfung oder der Ausführung oder des Wirksamwerdens eines ATTs eines betrachteten und noch nicht bestehenden Objekts - möglicherweise eines ATTs,
   ○ noch später, nämlich wie beim vorstehenden Aufzählungspunkt, jedoch erst bei bestehenden Objekten.

Eine TKGP kann so das zeit-/teilweise Wirksamwerden der Ausführung des erfindungsgemäßen Verfahrens (z.B. deren sofortige dem TLN sichtbare Veränderung der TKGP-Arbeitsweise oder Veränderung der TKGP-Arbeitsweise nur bei weiterer Veranlassung des das "treibende" Objekt kontrollierenden TLNs) - auf Veranlassung des diese Ausführung "treibenden" Objekts - verzögern und von der "wahr"-Evaluierung mindestens eines weiteren ATTs abhängig machen.

An der Benutzeroberfläche kann eine Referenz auf die "wahr"-Evaluierung dieses ATTs einer TKGP den Eindruck erwecken, das eine ihrer Veränderungen "treibende" Objekt wäre gar nicht ein TLN (oder von einem TLN kontrolliert). Für die Bestimmung des Schutzbereichs der vorliegenden Druckschrift ist dieser Eindruck irrelevant - relevant ist bei einer solchen Änderung einer TKGP lediglich, dass sie erfolgen kann und letztendlich nur TLN-gesteuert und nur von einem (in der TKGP zuvor irgendwie angelegten) "ändernden" Objekt automatisiert erfolgt.

Schließlich kann ein ATT zu einem Zeitpunkt mit einer reellen Zahl oder einem Intervall in den reellen Zahlen versehen sein, seiner sog. "Bewertung". Eine solche Bewertung eines ATTs braucht ebenfalls nur temporär zu existieren und kann zeitlich beliebig variieren. Diese ATT-Bewertung kann zur Priorisierung der unterschiedlichen ATTs eines Objektes dienen oder von/in der TKGP anderswie genutzt werden.

### E. Skizzen einiger Anwendungsklassen der Erfindung

In diesem Abschnitt wird mittels 8 Anwendungsklassen des erfindungsgemäßen Verfahrens erläutert, dass diese Anmeldung grundsätzlich völlig neue - gesellschaftlich/wirtschaftlich höchst attraktive - Formen der Nutzung moderner Kommunikationstechnik aufweist.

Mit diesen TKGP-Skizzen werden nicht nur die enormen Potentiale des erfindungsgemäßen Verfahrens verdeutlicht, sondern sie zeigen auch, dass die vorliegende Erfindung mit dem bisherigen Stand der Technik insofern nichts gemeinsam hat als sie sehr viel allgemeinere Einsatzbereiche der Telekommunikationstechnik offenbart und technisch erschließt, als sie bisher für die Telekommunikationstechnik bekannt sind.

### E.I. Keine Beschränkung der TKGV-Dienste auf initiale/terminale TLNs:

Erfindungsgemäß braucht/kann ein TKGV zum Zeitpunkt seiner Initialisierung oder danach
■ noch kein ATT zu haben, das den/die von ihm letztendlich betroffenen TLNs identifiziert oder
■ potentiell so viele TLNs betreffen, dass es keinen Sinn macht, sie alle von ihrer Betroffenheit zu diesen Zeitpunkten überhaupt etwas wissen zu lassen.
Ein Beispiel ist ein TKGV, der sich selbst als Telefon-Anruf/-Konferenz beschreibt und auf Grund dieses ATTs mit einer Vielzahl von anderen TLNs verknüpfbar ist, wobei der Initiator dieses TKGVs die Kontaktaufnahme mit ihm bzw. diesem TKGV durch interessierte TLNs erwartet - die dadurch zu verknüpften TLNs werden.

Einem solchen TKGV kann z.B. von einem von ihm betroffenen TLN per ATT ein bestimmtes "TLN-Profil" vorgegeben werden, sodass
■ ein weiterer betroffener TLN, der diesem TLN-Profil genügt, von der TKGP aktiv in diesen TKGV eingeladen wird, oder
■ ein verknüpfter TLN des TKGVs, der diesem Profil genügt, irgendwelche Moderationsaktivitäten in diesem TKGV übernehmen kann.

Gleichermaßen kann derjenige TLN, der diesen TKGV initiiert, ihn so auszeichnen, dass er nur einen "Rufer" zulässt und letztendlich bei nur einem TLN terminiert (beim "Gerufenen") - beide offenbar sinnvoll in "Zweier-TKGVs", definierbar per geeigneter ATTs für diesen TKGV - wobei es aber beide zum Zeitpunkt der Initialisierung dieses TKGVs noch gar nicht zu geben braucht: Ein derartiger TKGV kann auf Grund seines Leistungsangebots auch ohne diese beiden speziellen TLNs sinnvoll sein und auf der TKGP angeboten werden - wobei etwa einer von beiden ihn benutzenden TLNs dem Initiator irgend einen Obolus zu entrichten hat. Ein TKGV kann aber erfindungsgemäß auch so eingerichtet sein, dass er gewisse TLNs von vorn herein als von mit ihm betroffen ausweist - selbst wenn diese TLNs a priori in keiner Weise von diesem TKGV etwas wissen, sie womöglich noch gar nicht existieren.

### E.II. Flexible Rufer-, Gerufenen-, Betroffenen- und TKGV-Identifizierung:

Von einem durch ein erstes Objekt einer TKGP betroffenen weiteren Objekt dieser TKGP können weitreichende Identifizierungsmaßnahmen von der TKGP veranlasst werden. Diese können von mindestens einem von beiden dynamisch definierbar sein, z.B. Initiator-und/oder TLNs-Identifizierungen aller von einem der beiden Objekte betroffenen TKGVs, im einfachsten Fall alle betroffenen Telefon-Anrufe. Diese Identifizierung kann das Erfassen der Netzanschluss-Nummer des Rufenden mittels einer Auswertung von Signalisierungsinformationen bedeuten, in anderen Fällen die Uhrzeit und den Ort und/oder eines anderen "Attribut-Musters" der betrachteten TKGVs.

Zum erfindungsgemäßen Verfahren können insbesondere die unterschiedlichen Formen der schrittweisen Auto-Identifizierung der aktuell involvierten Objekte und/oder ihrer Attribute gehören, mit bzw. ohne bzw. unter Ausschluss der Mitwirkung (in dieser schrittweisen Auto-Identifizierung) von Interaktion/en der nur potentiell betroffenen Objekte.

Einige einfache Beispiele sollen dies in bevorzugten Ausgestaltungen verdeutlichen.
■ Eine Telefon-Anrufer-Identifizierung (Identifizierung des zeitlich Ersten der von einem derartigen TKGV betroffenen TLNs) durchgeführt für den in diesem TKGV Gerufenen (z.B. den zeitlich Zweiten der von diesem TKGV betroffenen TLNs) oder für einen anderen von diesem TKGV Betroffenen, erfordert von der TKGP, lediglich die TKF "automatische Anrufernummer-Identifizerung" durchzuführen.
■ Eine Anrufer-Identifizierung kann aber auch auf weniger triviale Weise erfolgen und insbesondere weitere, vom rufenden TLN bereitgestellte (etwa in Form von "call u-ser data" oder einer DTMF-Sequenz) und vom gerufenen TLN ausgewertete weitere Identifizierungsmittel umfassen. Semantisch umfasst die Anrufer-Identifizierung zu einem Telefon-Anruf bevorzugt:
   ○ die Überprüfung, ob ein personalisierter Notruf-Code vorliegt, der also die Person des anrufenden TLNs identifiziert und ggf. zusätzlich dessen Notlage signalisiert, und/oder
   ○ die Überprüfung eines sachbezogenen Zugangscodes, der dem gerufenen TLN ermöglicht, für den Ruf von vorn herein den sachlich passenden Kontext bereitzustellen, und/oder
   ○ die Mitteilung des rufenden TLNs seiner Bereitschaft, nach entsprechender Aufforderung durch potentiell angerufene TLN, differenzierte Selbst- und/oder Aufgaben-Identifizierungsdaten mitzuteilen, wie es etwa aus IVR-Systemen (IVR = interactive voice response) allgemein bekannt ist.

In einem erfindungsgemäßen Verfahren kann insbesondere eine solche Anrufer-/Aufgaben-Identifizierung durch mindestens einen TLN dynamisch für mindestens einen TKGV vorgegeben werden, der diesen TLN als potentiell von ihm Gerufenen zulässt - wobei letzterer TLN eine eigene Attributierung dieses TKVs (auch mittels eines weiteren TKGP Objektes) vornehmen kann.

Zum erfindungsgemäßen Verfahren können aber auch die unterschiedlichen Formen der schrittweisen Fremd-Identifizierung der involvierten Objekte und/oder ihrer Eigen- und/oder Relations-Attribute gehören, mit oder ohne expliziter/n Interaktion/en der potentiell Betroffenen, etwa eines (im nachfolgenden Unterabschnitt **E.VI.** erläuterten) Dienst-Zugangspunktes.

Bevorzugt ist jedem Attribut für seine Verwendung in einer solchen Betroffenen-/Aufgaben-Identifizierung ein Rang zugeordnet, d.h. die o.g. reelle Zahl seiner Bewertung in einem weiteren Attribut zu einem bestimmten Zeitpunkt. Im Falle, dass mehrere TKFs in einem TKGV für einen von ihm (potentiell) betroffenen TLN eine Anrufbehandlung vornehmen können (z.B. weil es mehrere Relations-Attribute zwischen dem jeweiligen potentiell rufenden und gerufenen TLN dieses TKGVs gibt) und dabei eine jeweilige TKF involvieren, wird für diesen TKGV bevorzugt die Realisierung des Reiations-Attributes mit dem höchsten Rang zuerst angestrebt, und dann - falls diese nicht möglich war - bevorzugt die Realisierung des Relations-Attributes mit dem nächst hohen Rang, usw.. In allen Fällen sieht die Erfindung vor, dass außer einer automatisierten - also möglicherweise anonym vorbestimmten - Auswahl des wirksam werdenden Relations-Attributes des betrachteten TKGVs, auch die von diesem Relations-Attribut betroffenen TLNs dessen Auswahl legitimieren/unterbinden können.

### E.III. Mehrfache Überprüfung (zeitlich und örtlich) der Attribute eines TKGVs:

Ein von einem TKGV Betroffener kann zu diesem TKGV und den anderen von ihm Betroffenen alle relevanten Zeitpunkte und Orte erfahren und seine Überprüfungen und Behandlungen durch diesen TKGV seinen Erfordernissen entsprechend gestalten. Z.B. kann er auf einer übertragungstechnisch gestörten Wegstrecke zu einem bestimmten anderen Betroffenen die Bereitstellung eines qualitativ besseren Dienstes oder deren Austauschen durch eine qualitativ bessere Wegstrecke verlangen, oder er kann die Führung dieser Wegstrecke in diesem TKGV über ein Aufzeichnungsgerät verlangen, oder er kann auf ihr die Realzeit-Übersetzung des Inhalts des TKGVs mittels eines vereidigten Dolmetschers verlangen - diese Forderungen kann er jederzeit vor oder während des Zustandekommens des TKGVs und/oder des Zustandekommens einer Datenübertragung darin und/oder des Zustandekommens einer bestimmten Kommunikationsform darin und auch jederzeit danach verlangen.

Spezialfälle: In einer bevorzugten Ausgestaltung nimmt ein TLN die Feststellung, ob ein betrachteter ankommender Anruf (= TKGV) die für diesen vorgesehene Anrufbehandlung erfahren soll oder nicht, vor dessen endgültigem Durchschalten vor - d.h.: durch eine dem Durchschalten vorangehende Signalisierung zum gerufenen TLN wurde diesem der Ruf bereits angezeigt, sodass er beispielsweise verlangen kann, dass der Anruf über ein anderes Netz terminiert wird (etwa per VolP-Box). Es wird daran erinnert, dass eine ähnliche Anrufbehandlung jedoch auch zu einem früheren Zeitpunkten erfolgen kann (beispielsweise noch vor einer Signalisierung des ankommenden Anrufs zur Vermittlungsstelle des gerufenen Teilnehmers) und auch an einem Anrufer-näheren Ort (beispielsweise um zu vermeiden, dass ein in Deutschland initialisierter Ruf an ein japanisches Mobiltelefon erst bis nach Japan geführt wird, wenn bereits klar ist, dass sich der Gerufene in Deutschland aufhält).

Spätestens ab hier offenbart sich, dass es sprachlich und begrifflich oft einfacher ist davon zu sprechen, dass die Objekte einer TKGP deren TKGVs "Dienste" zur Verfügung stellen bzw. erbringen - wobei der Terminus "Dienste" für den Sammelbegriff der Veränderungen an den TKGVs steht, die von ihnen betroffene Objekte an diesen TKGVs vornehmen können, wobei auch das Berichten über einen TKGV als eine Veränderung daran angesehen wird. Ein "Dienst" einer TKGP an einem ihrer TKGVs beschreibt also die an diesem TKGV durch diesen Dienst bewirkten Veränderungen, die das betrachtete Objekt an ihm erzielen kann bzw. erzielt, d.h. für ihn erbringen kann bzw. erbringt. Man beachte jedoch, dass dieser "Dienst"-Terminus/Begriff - ebenso wie der nachfolgend ebenso benutzte Terminus/Begriff "Dienst-Zugangspunkt" - nur den sprachlichen Umgang mit der erfindungsgemäßen TKGP vereinfacht, jedoch den TKGP-Begriff nicht einschränkt.

### E.IV. Dienste-Selektion, TK-Netz-Unabhängigkeit, Dienst-Zugangspunkt:

In einer bevorzugten Ausgestaltung der Erfindung werden die Objekte der TKGP in einem von ihr benutzten intermediären TK-Netz (wie im OSI-RM festgelegt, also etwa ein PSTN/ISDN, Internet, GSM-/UMTS-Netz, Satelliten-Netz, ..., an dem das Ziel-System eines TKGVs im Zuge seiner Initialisierung über seine L3-Adresse ermittelt wird) - etwa allein mittels dessen TK-Netz-internem TKGP-Server - bereitgestellt. Dieses intermediären TK-Netz kann durch einen von diesem TKGV betroffenen TLN "preselektiert" sein. Eine Preselektion durch einen gerufenen TLN - und dass Dienste bei einer solchen Preselektion in Anspruch genommen werden können - ist in der DE 199 43 742 A1 beschrieben. In dem erfindungsgemäßen Verfahren kann eine Preselektion von Diensten für einen TKGV und/oder für einen von ihm betroffenen TLN fest eingestellt werden oder für/von ihn/ihm auf "call by call" Basis oder jederzeit während seines Bestehens erfolgen, wobei es in den letzteren Fällen angemessener ist von einer "Selektion" zu sprechen.

Eine solche Preselektion oder Selektion von Diensten für einen TKGV bedarf aber ggf. überhaupt keines (TK-) Netzes gemäß OSI-RM. Vielmehr können TKGVs für ihre technische Kommunikation statt über ein OSI-RM-Netz auch über ein allen Kommunizierenden gemeinsam zugängliches und einziges physikalische Medium realisieren, wenn dieses nur mit einer - hier im Übrigen irrelevanten - Fähigkeit ausgestattet ist,
■ die Kommunikation in diesen TKGVs zu ermöglichen und ihnen
■ den/die Dienst-Zugangspunkt/e zu bieten, der/die für die Umsetzung der Preselektion/Selektion von Diensten unerlässlich ist/sind - ggf. nur für jeweils an den/die Dienste-Zugangspunkt/e angeschlossene/n Gruppe/n von TLNs oder deren Geräten.

Einem betrachteten TKGV und den von ihm (potentiell) betroffenen TLNs sind dieses physische Medium und der/die Dienste-Zugangspunkt/e also a priori zugänglich.

Ein solcher Dienste-Zugangspunkt kann einem TKGV den Zugang zu einem, zu mehreren oder zu allen Diensten einer betrachteten TKGP ermöglichen. Die Implementierung eines Dienste-Zugangspunkts kann "passiv" sein - dann muss ihn der betrachtete TKGV bzw. TLN jeweils eigenständig finden - oder "aktiv", d.h. das/die an dem Dienste-Zugangspunkt zugängliche/n Objekt/e sucht ständig bei den TLNs bzw. TKGVs ob sie für letztere tätig werden können (und können dann als eine Art "Sensor" angesehen werden). Das hier über Dienste-Zugangspunkte Gesagte gilt sinngemäß angepasst selbstverständlich auch für TKGVs, die mittels OSI-RM-Netzen kommunizieren.

### E.V. Sicheres TKGV-Berichtswesen für die von einem TKGV Betroffenen:

Ein sicheres Berichtswesen über einen TKGV erfordert ggf. eine jederzeitige Unterrichtung der von ihm Betroffenen (falls von diesen gewünscht) durch authentische und unverfälschte und möglichst vollständige und möglichst unabstreitbare Informationen nicht nur über die von ihnen für diesen TKGV angeforderten Maßnahmen und deren Erfolg/Misserfolg, sondern möglichst auch über die für diesen TKGV von ihnen nicht - sondern illegitimerweise von Dritten für ihn - angeforderten Maßnahmen und deren Erfolg/Misserfolg. Die TKGP sollte intern einem solchen Betroffenen gewisse derartige Informationen bereitstellen können. Das erfindungsgemäße Verfahren gestattet jedenfalls grundsätzlich die jederzeitige Bereitstellung für diese Betroffenen von solchen Informationen zu ihrer individuellen Benachrichtigung über solche TKGP-internen Vorgänge - d.h. auch über solche illegalen Angriffe und/oder Angriffsversuche .

### E.VI. Flexible Informations-Fliter eines TKGVs für von ihm Betroffene:

Das erfindungsgemäße Verfahren gestattet den von ihm Betroffenen jederzeit in Informations-Filtern einzusetzende TKFs zu definieren und zu implementieren, insbesondere zur Identifizierung der
■ zu filternden Informationen und ggf. deren totaler oder partieller Vernichtung bzw. deren Verknüpfung mit weiteren Informationen und/oder Weiterleitung solcher Informationen außerhalb des TKGVs, der
■ für deren Beeinträchtigung Verantwortlicher, sowie
■ zur Benachrichtigung des/der durch einen Filter direkt oder indirekt Betroffenen über einen solchen Filter und seine Arbeitsweise.
Die TKGP kann es ermöglichen, den von einem TKGV betroffenen TLNs unterschiedlich weit reichende Möglichkeiten einzuräumen, die Wirksamkeit von ihnen definierter Filter für andere von diesem TKGV betroffene bestimmte TLNs festzulegen oder für den gesamten TKGV und/oder andere TKGVs und deren TLNs. Spezielle solche Filter können zur Abwehr jeglicher Art unerwünschter Informationen eingesetzt werden (Anti-Spam-Filter, Viren-/...-Filter, DOS&DDOS-Filter, Monopolisierungs-Vermeidungs-Filter, ...) und können von der TKGP oder ihren TLNs zur allgemeinen Benutzung bereitgestellt sein.

### E.VII. Attribute-basiertes Netzwerkmanagement der TKGP:

Für die effiziente Zuordnung der Betriebsmittel exklusiv für die Realisierung der vielen unterschiedlichen Kommunikations-Dienste einer TKGP - etwa auf der Grundlage zukünftiger NGNs oder neuronaler Kommunikations-Systeme - ist dessen Netzwerkmanagement verantwortlich. Dieses kann stark zentralisiert (etwa auf einem einzigen Server global für alle Objekte der TKGP verantwortlich - dann bezeichnet man es i.A. als Netzwerkmanagement-System) aber auch stark dezentralisiert (etwa auf den Endsystemen der TLNs der TKGP, und dann auch nur lokal für diese verantwortlich) angesiedelt sein. Hinsichtlich der verfügbaren Kommunikations-Dienstleistungen hat dieses Netzwerkmanagement der TKGP
■ sowohl wegen deren Vielfalt und Unterschiedlichkeit zur Unterstützung der TKGVs im Sinne der TLNs
■ als auch und vor allem wegen deren grundsätzlich neuen Komplexität, bedingt durch die an sie gestellten völlig neuartigen Effizienz-/Produktivität-/Komfort-/Zuverlässigkeit-/Individualisierbarkeit-/...-steigernden TLN-Anforderungen,
eine neue Komplexitäts-Dimension erreicht und ist in Realzeit wohl nur beherrschbar, falls das erfindungsgemäße Verfahren der Realzeit-Reduzierung der Entscheidungs-Komplexität des TKGP-Managements auf automatisierbare Entscheidungen und die so automatisierbare Realzeit-Steuerung dieser Entscheidungen zum Einsatz kommt.

Mittels des erfindungsgemäßen Verfahrens kann die TKGP die Entscheidungs-Komplexität ihrer Aufgabe grundsätzlich reduzieren durch Beschränkung der Attribute aller ihrer Objekte auf solche Attribute, die automatisiert von der TKGP erkannt und übersetzt werden können in deren Objekt-individuelle und gesichert realisierbare Management-Funktionen, wobei diese Attribute bzw. Management-Funktionen letztendlich die Interessen an den TKGVs der von ihnen betroffenen TLNs dieser TKGP widerspiegeln.

Frühere TK-Management-Systeme betrachteten schon allein aus den beiden scheinbar einander widersprechenden Gründen "Sicherheit" und "Realzeit-Fähigkeit" den durch das erfindungsgemäße Verfahren aufgewiesenen Möglichkeiten überhaupt nicht - ganz abgesehen davon, dass bisher technische Kommunikations-Systeme kaum unter dem Aspekt betrachtet wurden, dass in ihnen und/oder durch sie die für die unterschiedlichsten TKGVs benötigte Betriebsmittel-Belegung
■ nur sehr kurzfristig sein darf, falls dies wesentliche Vorteile bringt,
■ andernfalls längerfristig sein darf - insbesondere wenn sie sehr billig sind.
Die Beachtung der beiden letztgenannten Aspekte, insbesondere die Möglichkeit ihrer attributiven Spezifikation und deren automatischer sofortiger Implementierbarkeit, können durch das erfindungsgemäße Verfahren hinsichtlich des Netzwerkmanagements einer TKGP realisiert werden. Bisher spielten diese beiden Aspekte in der technischen Kommunikation keine Rolle.

### E.VIII. Attribute-basierte Kostenberechnung für Betreiber und TLNs der TKGP:

Die Inanspruchnahme der Dienste einer TKGP durch seine TLNs wird i.d.R. nicht kostenlos sein vielmehr sollten die Erlöse von den TLNs aus dem Betrieb einer TKGP ertragsstärker sein als die aus dem Betrieb von TK-Netzen. Ein TK-Netzdienst-Anbieter (z.B. ein Internet Service Provider, ISP), der seinen Kunden einen erfindungsgemäßen Management-Service für die Benutzung seines TK-Dienstes zugänglich macht, benötigt von dieser TKGP deshalb beweisbare sog. "Call Data Records, CDRs" als verlässliche Grundlage
■ sowohl, gegenüber seinen TLNs, für jedes Marketing für seine TKGP und für jede Kosten-Berechnung für dessen Inanspruchnahme
■ als auch, für sich selbst, für die Rechtfertigung jeder Forderungsbuchung - häufig bei absolut minimalisierten Einzelkosten für diese TKGP-Dienstleistung-Inanspruchnahme im "micro payment"-Bereich.
Von fundamentaler Bedeutung ist also, dass in den - von einem TKGV betroffenen - CDRs des erfindungsgemäßen Verfahrens auch die Attribute aller von diesem TKGV betroffenen Objekte aufgezeichnet sind, die für die aus ihm resultierenden Rechnungsstellungen relevant sein können: Erst derartige Attribute-erfassende CDRs ermöglichen die Definition von TKGP-Diensten derart, dass sie im Sinne des Marketings für komfortable TK-Netz-Dienste als deren seriöse "unique selling points (USPs)" wirken können - weil sie auch die Informationen enthalten, die schnelllebige und sehr gezielte Marketing-Kampagnen ermöglichen, wie sie im Rahmen der zukünftigen NGN-Dienstleistungen absehbar sind, etwa Realzeit-Video-Konferenzen mit den Stars eines Films anlässlich dessen Premiere bei gleichzeitiger Bestellung seines vollständigen Inhalts zur Ansicht in einem Kegelklub, etc..

Die vorangehende Kurzbeschreibung der Erfindung in den Unterabschnitten **E.I.** bis **E.VIII. -** vor allem ihre daraus ersichtliche Abgrenzung gegenüber dem bisherigen Stand der TK-Technik - zeigt insbesondere, dass und warum sie den gegenwärtigen "status nascendi" der Technik beim Management von TKGVs, wie er eingangs mit den "blog"-/"push to"-Diensten angesprochen wurde, weit hinter sich lässt: Das Verfahren der Erfindung ermöglicht den von TKGVs aktuell und potentiell betroffenen TLNs nämlich ein grundsätzlich neues - weil viel "proaktiveres" und damit viel "umfassenderes" im umfassenden Sinne, weil viel zuverlässigeres/sichereres, viel individualisierbareres und trotzdem viel transparenteres in ganz unterschiedlicher Hinsicht (insbesondere hinsichtlich: Informiertheit, Kosten, unautorisierte Zugriffs-/Manipulationsversuche, missbräuchliche Kommunikationsversuche, ....) - Management ihrer TKGVs, in TK-Netzen ebenso wie in anderen "Kommunikations-Systemen" (letztere im weitesten Sinne verstanden). Hier abschließend wird vor allem an die einleitenden Hinweise auf neue, bisher nicht existierende Einsatzmärkte neuer Kommunikationstechniken erinnert.

### F. Detaillierte Beschreibung von Ausführungsbeispielen der Erfindung

Die vorliegende Erfindung wird nachfolgend anhand von Ausführungsbeispielen unter Bezugnahme auf die Figuren näher erläutert. Es zeigen:
- Figur 1: eine Anordnung mit einer Technischen-Kommunikationsgruppen-Plattform (TKGP) und ihrer Komponenten;
- Figur 2: schematisch Beziehungen einer TKGP zu TK-Netzwerken und anderen TKGPs;
- Figur 3: eine schematische Darstellung eines Ausführungsbeispiels des erfindungs- gemäßen Verfahrens;
- Figur 4: das Speichern von Identifizierungsdaten in den Eigen-Attributen (E-ATTs) einer Mehrzahl von TKFs als Reaktion auf die Eingabe durch einen gerufe- nen TLN;
- Figur 5: ein Flussdiagramm hinsichtlich der Behandlung eines ankommenden Rufes (TKGVs) durch eine Mehrzahl von TKFs;
- Figur 6: ein Flussdiagramm hinsichtlich der Schritte, die zu einer Entscheidung füh- ren, ob eine betrachtete TKF eine Anrufbehandlung eines ankommenden Anrufs (TKGVs) vornimmt oder nicht; und
- Figur 7: eine beispielhafte Telekommunikationsanordnung zur Durchführung eines Verfahrens zum TKGV-Management, hier der Behandlung der für einen ge- rufenen TLN bestimmten Anrufe, wobei beispielhaft zwei TKFs auf einen ankommenden Anruf angewendet werden.

Figur 1 zeigt eine Anordnung 300 mit einer Technischen-Kommunikationsgruppen-Plattform (TKGP) 100, die zur Verwaltung technischer Kommunikationsgruppenvorgänge dient und hierfür Dienste zur Verfügung stellt. Eine TKGP ist eine Plattform, auf der das erfindungsgemäße Verfahren ausgeführt werden kann. Ein technischer Kommunikationsgruppenvorgang ist ein technischer Vorgang, beispielsweise ein Telekommunikationsvorgang, in den zwei oder mehr Teilnehmer involviert sind. Die TKGP 100 ist eingebettet in eine reale Welt 301, die reale Objekte aufweist, z.B. Endgeräte 302, 303, die von "realen" Teilnehmern 110 bis 114 der TKGP 100 benutzt werden, und enthält Repräsentationen der realen Objekte. Die Endgeräte sind einem realen Teilnehmer nicht unbedingt fest zugeordnet; es kann sich z.B. auch um eine Telefonzelle oder ein Telefon in einem Hotelzimmer handeln, das von einem Teilnehmer zeitlich befristet genutzt werden kann, um die Dienste der TKGP zu nutzen. Beispielsweise ist das Endgerät 302 keinem der Teilnehmer 110-114 fest zugeordnet, während für das Endgerät 303 eine feste Zuordnung zu dem Teilnehmer 113 besteht.

In einer Ausführungsform ist die TKGP ein System, das einer Mehrzahl von Nutzern definierte Dienste oder Mechanismen zur Verfügung stellt. Sie kann als Hard- und/oder Software implementiert sein. Bevorzugt enthält sie Repräsentationen realer Objekte und stellt Schnittstellen zur Kommunikation mit diesen zur Verfügung. Die TKGP ermöglicht Kommunikationsvorgänge zwischen mehreren Nutzern durch Bereitstellung der Dienste oder Mechanismen.

Sofern ein realer Teilnehmer 110-114 die Dienste einer TKGP 100 und das von der TKGP 100 bereitgestellte Management nutzen will, muss er sich in der TKGP 100 anmelden. Die TKGP 100 enthält für jeden Teilnehmer mindestens ein Teilnehmer-Objekt (TLN-Objekt) aus einer Gruppe 1200, die initial leer sein kann, von TLN-Objekten 120-129, die die Teilnehmer in der TKGP repräsentieren, inklusive ihrer Teilnehmeranschlüsse, der angeschlossenen Endgeräte, sowie Computer und anderweitig unterstützender Kommunikationsanwendungssysteme. Dabei können für einen realen Teilnehmer durchaus mehrere TLN-Objekte existieren (z.B. eines für seinen privaten Gebrauch, eines für seinen geschäftlichen Gebrauch, eines für seine ehrenamtlichen Tätigkeiten, usw.). Beispielsweise sind in Fig. 1 dem realen Teilnehmer 114 die drei TLN-Objekte 124,128 und 129 zugeordnet.

Die TKGP 100 enthält und verwaltet neben der TLN-Objekt-Gruppe 1200 drei weitere Objekt-Gruppen 1300, 1400, 1500. Die Objekt-Gruppe 1300 enthält Attribut (ATT)-Objekte 130 bis 132, die z.B. Attribute anderer Objekte festlegen. Die Objekt-Gruppe 1400 enthält Telekommunikationsfunktions (TKF)-Objekte 140 bis 142, die Objekt-Gruppe 1500 enthält technische Kommunikationsgruppenvorgangs (TKGV)-Objekte 150 bis 152. Jedes dieser Objekte kann ein oder mehrere reale-Welt-Objekte der entsprechenden Art repräsentieren.

Ein Objekt der TKGP liegt nach der Ausführung des erfindungsgemäßen Verfahrens in einer durch die TKGP ausführbaren Form vor. Hierbei kann es sich z.B um eine informationstragende Datenstruktur, wie sie z.B. aus der objektorientierten Programmierung bekannt ist, oder einen Prozess handeln.

Die TKGP-Objekte der Objekt-Gruppen 1200, 1300, 1400, 1500 können mit Hilfe des erfindungsgemäßen Verfahrens von realen Teilnehmern erzeugt bzw. modifiziert werden.

Das Erzeugen einer ausführbaren Darstellung aus dem ändernden Objekt erfolgt insbesondere realzeitnah, d.h. im Wesentlichen instantan (wobei natürlich eine geringe Zeitdifferenz bis zum Fertigstellen des Algorithmus auftreten kann), d.h. dass ein Teilnehmer einen im Prinzip beliebigen Zeitpunkt für das Wirksamwerden der Änderung der TKGP vorgeben kann.

Die TKGP 100 nutzt z.B. Server 160 oder TK-Netze 170 bis 172 aus der realen Welt 301. Bei dem Server 160 kann es sich z.B. um eine Datenbank, einen Webseitenserver, einen FTP-Server usw. handeln. Das TK-Netz 170-172 kann z.B. ein ISDN- oder GSM-Netz oder das Internet sein, mitsamt der jeweiligen kompletten Infrastruktur und in diesen Netzen vorhandenen Funktionalität. Die TK-Netze ihrerseits können wieder unterschiedliche Medien 180 bis 183 nutzen, wie z.B. Funk, Glasfaser, Kupfer, Raum.

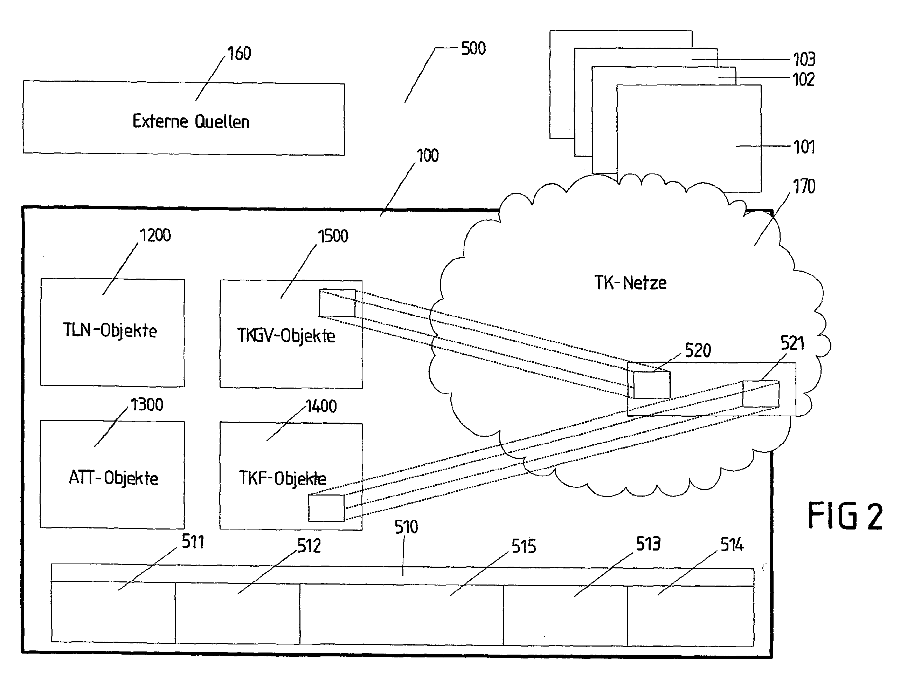

Figur 2 zeigt eine Anordnung 500, die eine erste TKGP 100 aufweist, die analog zu Figur 1 eine TLN-Objekt-Gruppe 1200, eine ATT-Objekt-Gruppe 1300, eine TKF-Objekt-Gruppe 1400 sowie eine TKGV-Objekt-Gruppe 1500 enthält. Die TKGP 100 setzt auf einem oder mehreren TK-Netzen 170 auf, wobei die TKGP 100 auf die Funktionaltitäten und die Infrastruktur der TK-Netze 170 zurückgreifen kann.

Einige der TGKV- oder TKF-Objekte der TKGP können Teile von Kommunikationsvorgängen 520 oder Funktionalitäten 521 nutzen, die von den TK-Netzen 170 zur Verfügung gestellt werden (dies ist angedeutet durch die gestrichelten Linien, die von den Objekt-Gruppen 1400, 1500 zu den TK-Netzen 170 verlaufen). Es wird jedoch darauf hingewiesen, dass die TKGP nicht darauf angewiesen ist, Kommunikationsvorgänge oder Funktionen eines TK-Netzes 170 zu nutzen, sondern auch eigene TKGVs ermöglichen und eigene TKFs anbieten kann. Folglich kann die TKGP 100 auch TGKV- bzw. die TKF-Objekte aufweisen, die TKGP-eigene TGKVs oder TKFs sind oder repräsentieren, die nicht von dem TK-Netz 170 bereitgestellt werden.

Die Anordnung 500 weist neben der TGKP 100 weitere TKGPs 101-103 auf, die über ein Netz oder über mehrere Netze der TK-Netze 170 mit der TKGP 100 verbunden sein können, so dass zwischen den unterschiedlichen TKGPs 100-103 ein Informationsaustausch möglich ist. Grundsätzlich sind durch die Verwendung der TK-Netze nicht nur Verbindungen zwischen mehreren TKGPs möglich, sondern es stehen auch die durch diese TK-Netze erbrachten Kommunikationsfunktionen/-vorgänge zur Verfügung;

Außerhalb der TKGP 100 liegen externe Quellen 160, wie z.B. Server, auf denen Programme laufen oder Messgeräte, deren Messwerte in elektronische Form gebracht werden können usw.. Die externen Quellen 160 können z.B. Informationen für die TKGVs liefern, die von der TKGP 100 zur Verfügung gestellt werden.

Die TKGP 100 besitzt darüber hinaus Schnittstellen 510; dabei kann es sich z.B. um Schnittstellen zu einem ERP System 512, zu einem Reporting Modul 513, zu einem Billingsystem 514 oder um weitere Schnittstellen 515 handeln. Auf jeden Fall existiert mindestens eine Nutzer-Schnittstelle 511, über die die Nutzer der TKGP 100 die Dienste der TKGP in Anspruch nehmen können und z.B. die Bereitstellung eines neues Dienstes durch die TKGP anfordern und entsprechende Spezifikationen hierfür der TKGP übermitteln können. Die Nutzer-Schnittstelle 511 kann z.B. eine graphische Oberfläche sein, oder eine Eingabemöglichkeit von DTMF Tönen über Telefon, oder eine Spracheingabemöglichkeit, etc..

Über solche Schnittstellen können die Objekte der Objekt-Gruppen 1200, 1300, 1400, 1500 der TKGP mit den Objekten der realen Welt Informationen austauschen um auf die durch die Objekte der realen Welt angebotenen Dienste zugreifen zu können.

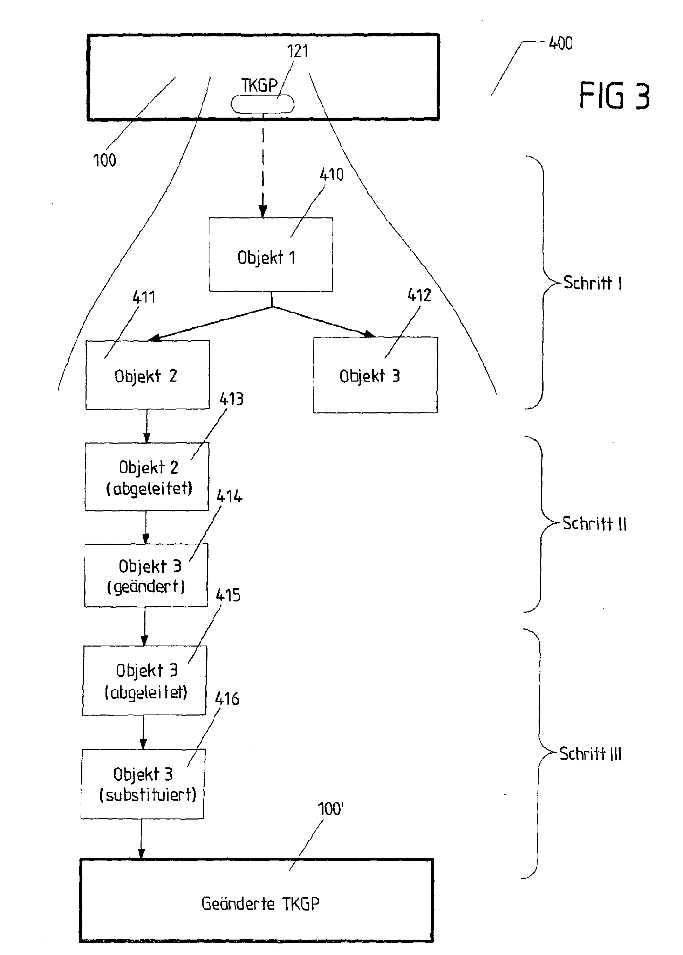

Figur 3 zeigt ein Beispiel für das erfindungsgemäße Ändern einer Technischen-Kommunikationsgruppen-Plattform (TKGP) 100, die z.B. wie die TKGPs der Figuren 1 oder 2 ausgebildet ist und entsprechend Objekte der Objektgruppen TLN, ATT, TKF und TKGV aufweist.

Im Folgenden soll der Begriff "Bereitstellen" als "Identifizieren, Modifizieren oder Erzeugen" aufgefasst werden.

Grundsätzlich können das treibende, das ändernde und das weitere Objekt jeweils aus sämtlichen der vier Objekt-Gruppen 1200, 1300, 1400, 1500 stammen.

Das Erzeugen einer ausführbaren Darstellung aus einem Objekt erfolgt in der Regel automatisiert (d.h. ohne dass eine weitere Interaktion des Teilnehmers mit der TKGP erforderlich wäre).

Die TKGP ermöglicht, automatisiert ein im Prinzip beliebiges Objekt bereitzustellen, z.B. um einen von einem Teilnehmer gewünschten, neuen technischen Kommunikationsgruppenvorgang zu realisieren. Hierzu stellt die TKGP 100 ein von einem Teilnehmer der TKGP kontrolliertes, treibendes Objekt bereit, das ein von der TKGP bereitzustellendes, weiteres Objekt definiert.

Ein Teilnehmer der TKGP 100 wünscht z.B. die Bereitstellung eines neuen Dienstes durch die TKGP (etwa eine neue oder eine modifizierte Telekommunikationsfunktion (TKF)) oder allgemein eine Modifikation der TKGP und übermittelt entsprechende Spezifikationen an die TKGP. Zur Definition des weiteren Objektes können auch Bedingungen gehören, in Abhängigkeit derer das weitere Objekt erzeugt oder ausgeführt werden. Hierauf stellt die TKGP in einem ersten Schritt (Schritt I) ein treibendes Objekt 410 bereit, d.h. identifiziert ein vorhandenes Objekt oder definiert eines, das von einem dem Teilnehmer zugeordneten Teilnehmer-Objekt (TLN-Objekt) 121 kontrolliert wird.

Das treibende Objekt 410 definiert ein weiteres Objekt 412, das in den/die vom Teilnehmer gewünschten Dienst bzw. Modifikation der TKGP geändert werden soll. Des Weiteren stellt die TKGP in Schritt I ein änderndes Objekt 411 bereit, das die gewünschten Änderungen an dem zu ändernden Objekt 412 durchführen kann.

Es wird darauf hingewiesen, dass selbstverständlich nicht nur das TLN-Objekt 121, sondern sämtliche dargestellte Objekte (wie z.B. das zu ändernde Objekt 412 und das ändernde Objekt 411) zur TKGP 100 gehören. Der Ablauf zum Bereitstellen des weiteren Objektes ist zwar aus Gründen der Übersichtlichkeit unterhalb der TKGP 100 dargestellt, erfolgt jedoch tatsächlich innerhalb der TKGP (was durch die geschweiften Linien seitlich des Ablaufschemas angedeutet ist).

Der Typ des treibenden, des ändernden und des zu ändernden Objektes ist im Prinzip beliebig. Beispielsweise kann das ändernde Objekt in diesem Beispiel ein Objekt der TLN-Objekt-Gruppe, der ATT-, der TKF- oder der TKGV-Gruppe sein.

Durch die Wahl bzw. das Erzeugen des ändernden Objektes 411 wird gleichzeitig sichergestellt, dass die Änderung am zu ändernden Objekt 412 wie gewünscht und ab einem festgelegten Zeitpunkt wirksam werden soll.

In einem weiteren Schritt (Schritt II) erzeugt die TKGP aus dem ändernden Objekt 411 eine durch sie ausführbare Darstellung des Objektes 411 (abgeleitetes Objekt 413). Die TKGP weist z.B. einen Interpreter oder einen Compiler auf, der aus einer Datenstruktur, die dem ändernden Objekt zugeordnet ist, eine unter der (z.B. als Software ausgebildeten) TKGP ausführbare Darstellung erzeugt, wobei die ausführbare Darstellung beispielsweise ein Algorithmus, insbesondere eine Prozedur, ist.

Schließlich wird das erzeugte (abgeleitete) ausführbare Objekt 413 durch die TKGP ausgeführt, wodurch das zu ändernde Objekt 412 geändert und somit das geänderte Objekt 414 entsteht. Hierbei werden z.B. Attribute, die das zu ändernde Objekt betreffen, verändert. Das ursprüngliche, zu ändernde Objekt 412 wird zunächst beibehalten.

Es wird darauf hingewiesen, dass das erfindungsgemäße TKGP-Management neben dem Verändern eines in der TKGP bereits bestehenden Objektes weitere Möglichkeiten zum Bereitstellen des weiteren Objektes umfasst, z.B. durch Erzeugen eines neuen Objektes.

In einem dritten Schritt (Schritt III) wird durch die TKGP 100 aus dem geänderten Objekt 414 eine ausführbare Darstellung 415 erzeugt, die unter der TKGP ausführbar ist (analog zum ändernden Objekt 413). Das zu ändernde Objekt wird durch die ausführbare Darstellung 415 substituiert.

Die Reihenfolge des Substituierens des zu ändernden Objektes durch das geänderte Objekt und des Erzeugens der ausführbaren Darstellung aus dem geänderten Objekt ist im Prinzip beliebig und hängt z.B. von der Implementierung der jeweiligen TKGP ab. Allerdings muss die Erzeugung der ausführbaren Darstellung und die Substituierung spätestens zum einem durch das treibende Objekt definierten Zeitpunkt geschehen sein, denn ab dann soll die Änderung wirksam/verfügbar sein.

Durch das Bereitstellen des geänderten Objektes ist die TKGP 100 geändert und in eine neue TKGP 100' überführt worden. Die Erfindung ist, wie erwähnt, jedoch nicht darauf beschränkt, zum Bereitstellen des weiteren Objektes ein bestehendes Objekt der TKGP abzuändern, sondern kann hierfür z.B. auch ein neues Objekt erzeugen, In diesem Fall würde eine gegenüber der ursprünglichen TKGP erweiterte TKGP erzeugt werden. Eine Änderung der TKGP wird in jedem Fall von einem ihrer Objekte durchgeführt.

In dem Ausführungsbeispiel der Fig. 3 wird zwar jeweils nur ein einzelnes änderndes bzw. zu änderndes Objekt gewählt; es können aber auch durchaus jeweils mehrere sein.

Des Weiteren wird darauf hingewiesen, dass mit der Bezeichnung "ein" (z.B. Objekt) "mindestens ein" gemeint ist, so dass z.B. von dem treibenden Objekt nicht nur ein, sondern auch mehrere weitere, bereitzustellende Objekte definiert werden können.

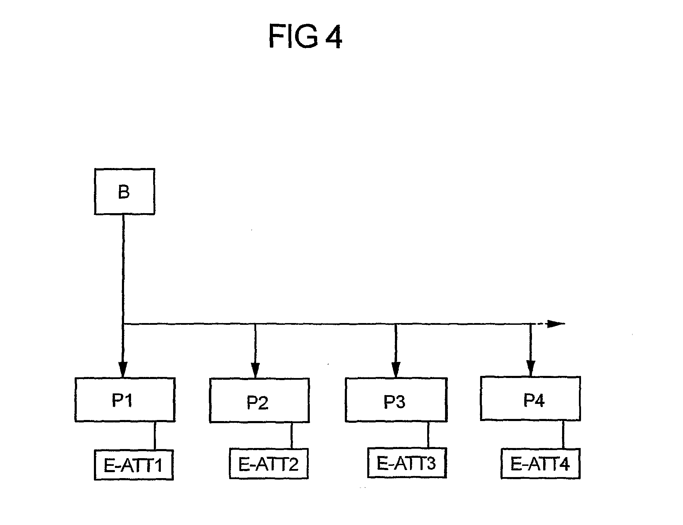

Anhand der Figuren 4 bis 7 wird im folgenden ein spezielles Ausführungsbeispiel des erfindungsgemäßen Verfahrens und darin realisierter Telekommunikations-Funktionen (TKFs) beschrieben.

Die Figur 4 zeigt in abstrakter Darstellung vier TKFs P1, P2, P3, P4, die jeweils eine definierte Anrufbehandlung eines ankommenden Anrufs vornehmen. Die Anzahl der TKFs kann dabei grundsätzlich beliebig sein. Beispielsweise handelt es sich bei den TKFs jeweils um selbständig agierende Prozesse. Derartige selbständig agierende Prozesse könnnen insbesondere so ausgestaltet sein, dass sie keine mehreren Prozessen gemeinsame, globale Variablen, sondern nur lokale Variablen aufweisen. Die TKFs sind beispielsweise als Software implementiert, die auf einem oder mehreren Prozessoren ausgeführt wird.

Weiterhin sind jeder TKF Eigen-Attribute E-ATT1, E-ATT2, E-ATT3, E-ATT4 mit Identifizierungsdaten zugeordnet, Diese Eigen-Attribute dienen der Überprüfung des "8etroffenseins" bzw. der Verknüpfbarkeit der TKGVs zu TLNs und TKFs, die bei Vornehmen eines Anrufs zu einem bestimmten gerufenen TLN B eine bestimmte Anrufbehandlung entsprechend der jeweiligen TKF P1, P2, P3, P4 erfahren sollen.

Die Eigen-Attribute E-ATT1, E-ATT2, E-ATT3, E-ATT4 enthalten dabei beispielsweise als Identifizierungsdaten bestimmte Rufnummern. Zu jedem ankommenden Anruf für TLN B wird durch die TKFs jeweils geprüft, ob die Rufnummer des anrufenden TLNs TLN A einer der in dem jeweiligen Eigen-Attribut E-ATT1, E-ATT2, E-ATT3, E-ATT4 der TKFs P1, P2, P3, P4 gespeicherten Rufnummer entspricht. Für diesen Fall wird die entsprechende TKF P1, P2, P3, P4 auf diesen TKGV (den ankommenden Anruf) angewendet.

In einem anderen Beispiel enthalten die Eigen-Attribute statt oder ergänzend zu bestimmten Rufnummern bestimmte Namen. Zur Feststellung, ob eine bestimmte TKF auf einen TKGV (ankommenden Anruf) angewendet werden soll oder nicht, verlangt die TKF beispielsweise im Rahmen einer interaktiven Eingabeaufforderung von dem rufenden Teilnehmer, seinen Namen einzugeben (beispielsweise codiert über DTMF).

Der Fachmann erkennt, dass es vielfältige Möglichkeiten gibt, TLNs oder auch TLN-Gruppen durch Identifizierungsdaten zu identifizieren und im Falle eines TKGVs (ankommenden Anrufs) festzustellen, ob der rufende TLN in der Menge der gespeicherten TLNs bzw. Identifizierungsdaten enthalten ist.

Die Eigen-Attribute E-ATT1, E-ATT2, E-ATT3, E-ATT4 können in beliebiger Weise realisiert sein. Zum Beispiel sind die Eigen-Attribute als Speicher (z.B. Software-Speicher oder Hardware-Speicher) realisiert bzw. in solchen Speichern enthalten. Sieht dieses Ausführungsbeispiel als selbständig agierende Prozesse realisierte TKFs vor, kann jedem der Prozesse ein Speicher zugeordnet sein, der prozessspezifische Daten enthält Sofern ein Hardware-Speicher verwendet wird, kann er beispielsweise durch einen definierten Speicherbereich eines RAM-Speichers eines Prozessors bereitgestellt werden. Es ist dabei aber wichtig, dass der Speicherbereich allein dem betrachteten TKGV (und -sofern dies zugelassen ist- den weiteren durch diesen TKGV betroffenen Objekten) zur Verfügung steht und nur diese Objekte auf das betrachtete Eigen-Attribut zugreifen können.

Die Figur 4 zeigt für die dargestellten vier TKFs die Festlegung der Eigen-Attribute, hier das Speichern von Identifizierungsdaten in Reaktion auf die Eingabe durch einen gerufenen TLN B. Der TLN B teilt - beispielsweise unter Verwendung einer grafischen Benutzeroberfläche - jeder der TKFs P1, P2, P3, P4 mit, welche gerufenen TLNs eine Anrufbehandlung entsprechend der jeweiligen TKF P1, P2, P3, P4 erfahren sollen. Die Eigen-Attribute E-ATT1, E-ATT2, E-ATT3, E-ATT4 speichern diese spezifischen Identifizierungsdaten. Beispielsweise teilt der gerufene TLN B der TKF P1 eine Anzahl von Telefonnummern mit. Wenn ein ankommender Anruf als Absenderinformation (calling party number) eine Rufnummer aufweist, die einer dieser Rufnummern entspricht, so erfährt der ankommende Ruf eine Anrufbehandlung entsprechend der TKF P1.

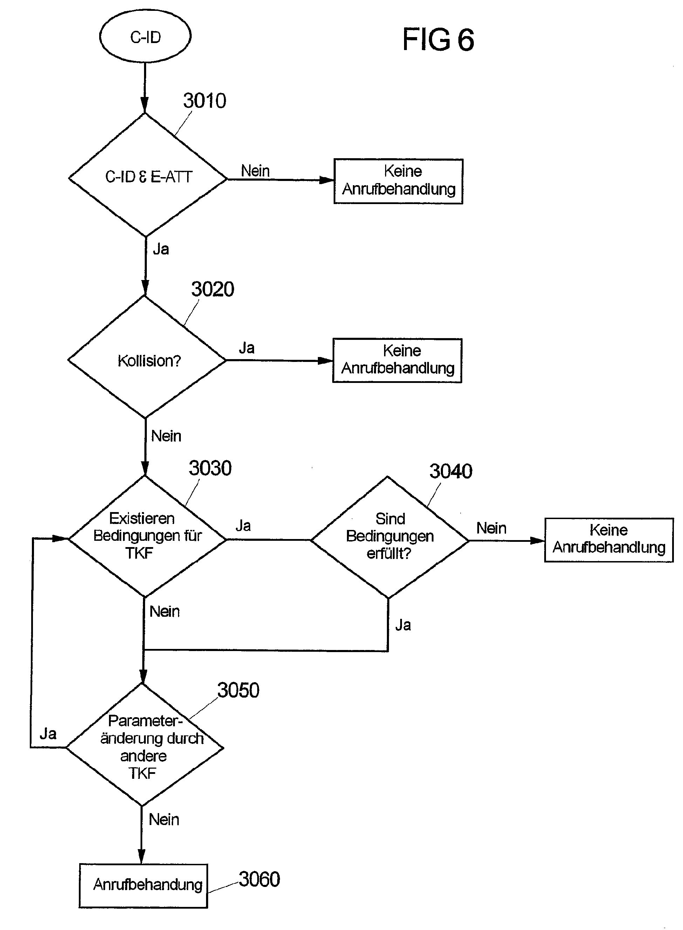

Für jede der TKFs können TLNs durch den gerufenen B-TLN angegeben und gespeichert werden. Dabei kann natürlich auch vorgesehen sein, dass bestimmte rufende TLNs in den Eigen-Attributen E-ATT1, E-ATT2, E-ATT3, E-ATT4 mehrerer TKFs gespeichert werden. Wie in einem solchen Fall eventuell auftretende Konflikte bei der Anrufbehandlung behandelt werden, wird weiter unten anhand der Figur 6 erläutert werden.

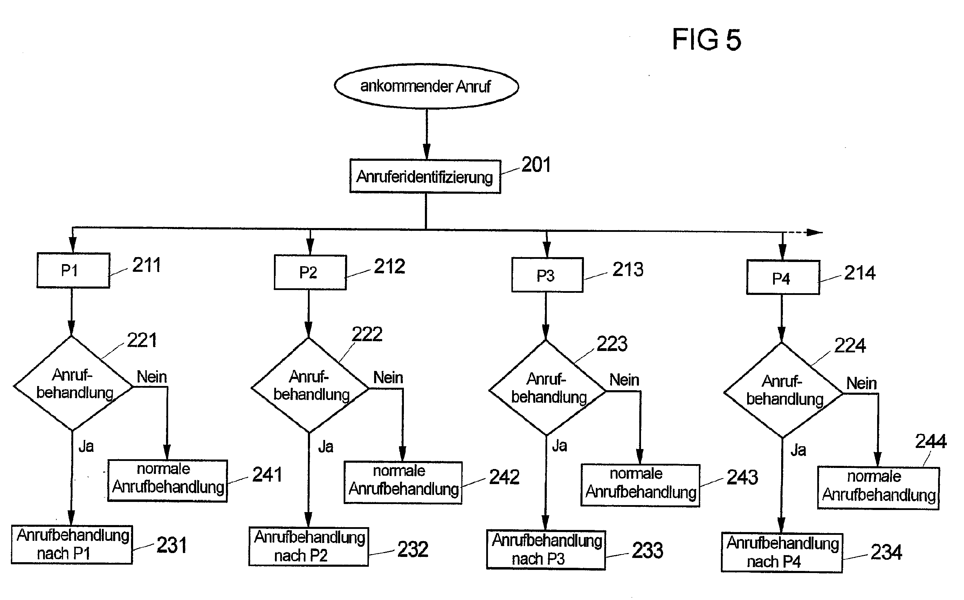

Die Figur 5 zeigt ein Ablaufdiagramm zur Behandlung eines ankommenden Anrufs. Ein ankommender Anruf erfährt in einem ersten Schritt 201 eine Anruferidentifizierung. Zur Anruferidentifizierung werden beispielsweise Signalisierungsinformationen des ankommenden Rufs ausgewertet. Beispielsweise ist in dem Dienste integrierenden digitalen Telekommunikationsnefiz ISDN vorgesehen, dass bei der Anrufsignalisierung die Telefonnummer des rufenden TLNs, die so genannte calling party number, mit gesendet wird. Es braucht daher nur das entsprechende Signalisierungs-Protokolielement ausgewertet werden.

Die Anruferidentifizierung kann jedoch auch in anderer Weise erfolgen. Beispielsweise kann vorgesehen sein, dass der anrufende TLN dazu aufgefordert wird, seinen Namen oder andere ihn identifizierende Daten zu nennen oder (per DTMF oder über Computer) einzugeben. Weitere Arten der Anruferidentifizierung sind in der EP 0 837 611 A2 beschrieben, auf die insofern ausdrücklich Bezug genommen wird.

Die Anruferidentifizierung 201 führt zur Identifizierung des anrufenden TLN hinsichtlich mindestens einer seiner Parameter, beispielsweise durch Erfassen der Rufnummer des rufenden TLNs. Das Ergebnis der Anruferidentifizierung wird im folgenden auch als C-ID (C-ID = Calling Party ID) bezeichnet.

Die Anruferidentifizierung kann auch zu dem Ergebnis führen, dass ein eingehender Anruf von einem TLN stammt, der einer Gruppe von Personen angehört, die eine bestimmte Qualität besitzen. Die Qualität ist beispielsweise die Zugehörigkeit zu der eigenen Familie, und diese Qualität wird repräsentiert durch einen Code, den der rufende TLN auf eine Anforderung oder zusammen mit der gewählten Rufnummer mitteilt. Der Code wird in der Anruferidentifizierung 201 erkannt und der TLN (Anrufer) dadurch hinsichtlich seiner Zugehörigkeit zu einer bestimmten Gruppe identifiziert. In den E-ATTs der TKF ist der Code natürlich gespeichert, so dass er mit einem eingegebenen Code verglichen werden kann,

In den Schritten 211, 212, 213, 214 wird jeder ankommende Anruf den vorhandenen TKFs P1, P2, P3, P4 zur Anrufbehandlung zugeführt. Dabei überwacht (monitort) jede TKF die ankommenden Anrufe und prüft, ob sie auf diese Anrufe anzuwenden ist.

Es wird darauf hingewiesen, dass die Anruferidentifizierung nicht zentral, beispielsweise durch eine Dienste-Vermittlungsstelle eines bestimmten Telekommunikationsnetzes zu erfolgen braucht, vielmehr auch gesondert durch jede der TKFs P1, P2, P3, P4 durchgeführt werden kann.

Die Prüfung, ob eine Anrufbehandlung entsprechend der jeweiligen TKF vorzunehmen ist, erfolgt in dem Prüfschritt 221, 222, 223, 224 für jede TKF. Diese Prüfung erfolgt mit Hilfe der Auswertung der Attribute. Sofern die Überprüfung dazu führt, dass eine Anrufbehandlung durchzuführen ist, so erfolgt eine solche Anrufbehandlung nach der jeweiligen TKF P1, P2, P3, P4 in den Schritten 231, 232, 233, 234. Sofern die Überprüfung dazu führt, dass keine Anrufbehandlung entsprechend der jeweiligen TKF P1, P2, P3, P4 durchzuführen ist, erfolgt eine normale Anrufbehandlung, d.h. das Gespräch wird ohne eine besondere Anrufbehandlung standardgemäß zu dem gerufenen B-TLN durchgeschaltet, Schritte 241, 242, 243, 244.

Die Figur 6 zeigt die genauen Abläufe bei der Entscheidung, ob eine Anrufbehandlung vorgenommen wird, entsprechend den Schritten 221, 222, 223, 224 der Figur 5.

In einem nächsten Schritt 3010 wird geprüft, ob eine bei der Anruferidentifizierung sich ergebende Identität C-ID in der betrachteten TKF vorhanden ist. Es wird in Schritt 3010 geprüft, ob die ermittelte Anruferidentität in der Menge der ldentifizierungsdaten der Eigen-Attribute E-ATT1, E-ATT2, E-ATT3, E-ATT4 der betrachteten TKF enthalten ist. Wenn dies nicht der Fall ist, erfolgt keine Anrufbehandlung entsprechend der betrachteten TKF.

Wenn die C-ID Element der ldentifizierungsdaten ist, die zu der betrachteten TKF in derem Eigen-Attribut gespeichert sind, so erfolgt in einem nächsten Schritt 3020 eine Prüfung, ob eine Kollision mit einer TKF höherer Priorität vorliegt. Wie erläutert, monitoren sämtliche vorhandenen TKFs einen neuen, ankommenden Anruf und prüfen ihre Anwendbarkeit auf den betrachteten Anruf. Nun ist es möglich, dass eine Mehrzahl oder auch alle der vorhandenen TKFs auf einen eingehenden Anruf anzuwenden sind.

Dabei kann der Fall eintreten, dass eine TKF nicht mehr sinnvoll ausgeführt werden kann, wenn ein eingehender Ruf bereits entsprechend einer anderen TKF behandelt wurde. Beispielsweise ist es nicht sinnvoll, die TKF "Anrufbeantworter" vorzunehmen, wenn aufgrund einer vorangehenden TKF "Anrufweiterleitung" das Gespräch erfolgreich zu einem anderen Endgerät bzw. Teilnehmeranschluss geroutet und terminiert werden konnte. In einem anderen Beispiel ist es nicht möglich, die TKF "Anrufbeantworter" auszuführen, wenn zuvor die TKF "Medienkonvertierung" von Sprache in Fax durchgeführt wurde. Es ist daher vorgesehen, den einzelnen TKFs einen unterschiedlichen Rang zuzuordnen, und für den Fall, dass mehrere TKFs auf einen eingehenden Anruf anwendbar sind, zunächst die TKF höchsten Ranges auszuführen, dann die TKF des nächst niedrigeren Ranges, etc.

Wenn in dem Schritt 3020 festgestellt wird, dass eine Kollision mit einer höherrangigen TKF vorliegt, so erfolgt keine Anrufbehandlung. Anderenfalls wird in einem weiteren Schritt 3030 geprüft, ob bestimmte Bedingungen für das Ausführen der TKF existieren.

Wenn beispielsweise eine betrachtete TKF als Anrufbehandlung die Terminierung eines Anrufs über das Internet plus DSL-Anschluss oder WLAN vorsieht, so kann eine solche TKF nur dann erfolgreich ausgeführt werden, wenn der gerufene B-TLN über einen DSL-Anschluss oder einen WLAN-Anschluss verfügt und ihm aktuell eine IP-Adresse zugeordnet ist.

Der Dienst bzw. die TKF "Medienkonvertierung von Sprache in Fax" ist als weiteres Beispiel nur dann möglich, wenn der gerufene B-TLN ein Faxgerät oder eine Faxkarte besitzt.

In Schritt 3030 wird also geprüft, ob solche Bedingungen existieren. Wenn dies der Fall ist, wird in Schritt 3040 geprüft, ob die entsprechenden Bedingungen erfüllt sind, also beispielsweise der B-TLN an einen DSL-Anschluss angeschlossen und ihm eine IP-Adresse zugeordnet ist. Sind die Bedingungen nicht erfüllt, erfolgt keine Anrufbehandlung entsprechend der betrachteten TKF.

Sind die Bedingungen erfüllt, wird in Schritt 3050 geprüft, ob sich möglicherweise vorhandene Parameter aufgrund vorangegangener höherwertiger TKFs geändert haben. Wenn beispielsweise eine höherrangige TKF eine Anrufweiterleitung vornahm, so hat sich die Rufnummer des gerufenen Teilnehmers geändert. Die TKF muss in diesem Fall zurück zu Schritt 3030 und prüfen, ob bestimmte Bedingungen für das erfolgreiche Ausführen der TKF auch trotz der Parameteränderung noch vorhanden sind.

Sofern keine weiteren Änderungen (jedenfalls nach erneutem Durchlaufen der Schritte 3030 und 3040) zu berücksichtigen sind, erfolgt dann in Schritt 3060 die Anrufbehandlung entsprechend der betrachteten TKF.

Das Ablaufschema der Figur 6 wird für jede der vorhandenen TKFs durchgeführt. Des Weiteren wird das Ablaufschema für jeden eingehenden Anruf durchgeführt.

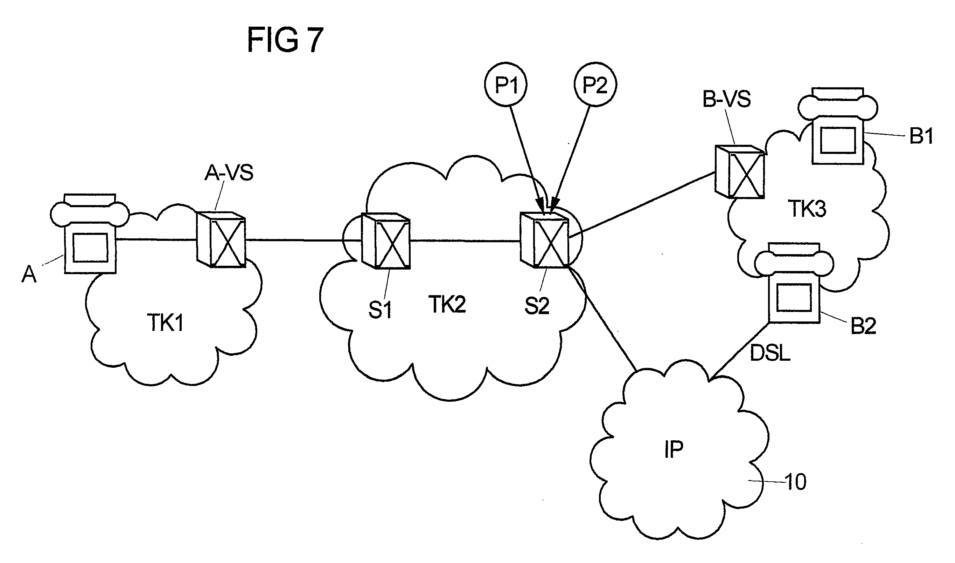

Figur 7 zeigt beispielhaft eine Telekommunikationsanordnung zur Durchführung des beschriebenen Verfahrens mit zwei beispielhaften TKFs, die auf einen vorliegenden ankommenden Anruf angewendet werden.

Ein rufender A-TLN befindet sich in einem ersten TK-Netz TK1 und ist dort mit einer Teilnehmervermittlungsstelle A-VS verbunden. Das Netz TK1 ist das Teilnehmernetz des A-TLNs. Beispielsweise handelt es sich um das Festnetz des ehemaligen Monopolisten, der Deutschen Telekom AG.

Der A-TLN will einen Fernsprechruf zu einem TLN B1 in einem weiteren Tellnehmernetz TK3 durchführen. Das Netz TK3 ist üblicherweise identisch mit dem Netz TK1, obwohl dies nicht notwendiger Weise der Fall sein muss, Der B1-TLN ist mit seiner lokalen Teilnehmervermittlungsstelle B-VS verbunden.

Die Verbindung zwischen dem A-TLN und dem B1-TLN erfolgt nun nicht direkt über das TK-Netz TK1, TK3, sondern über ein präselektiertes dazwischen geschaltetes Telekommunikationsnetz TK2 eines Verbindungsnetzbetreibers. Dieses zwischengeschaltete Telekommunikationsnetz TK2 stellt dem gerufenen TLN B1 (und ggf. auch dem rufenden TLN A, worauf es vorliegend aber nicht ankommt) zusätzliche Dienste zur Verfügung. Bei den Diensten handelt es sich beispielsweise um Anklopfen, Anrufbeantworterfunktion, Anrufweiterleitung, Medienkonvertierung, Netzwerkkonvertierung etc. Solche Dienste sind dem Fachmann an sich bekannt, so dass sie an dieser Stelle nicht im Einzelnen erläutert werden.

Zwei solcher Dienste sind in der Figur 7 beispielsweise schematisch als T1 und T2 dargestellt.

Ein ankommender Anruf wird von der Vermittlungsstelle A-VS des Netzes TK1 an einen ersten Switch S1 des Netzes TK2 und von diesem an den Switch S2 des Netzes TK2 geleitet. Ohne eine Anrufbehandlung durch die TKF P1 und/oder P2 würde der ankommende Anruf über die Teilnehmervermittlungsstelle B-VS in bekannter Weise zu dem B1-TLN geroutet, wobei eine Signalisierung zwischen dem Switch S2 und der Teilnehmervermittlungsstelle B-VS stattfinden würde.

Der B1-TLN hat den TKFs P1, P2 entsprechend der Figur 4 jeweils mitgeteilt, welche rufenden TLNs die entsprechende TKF bzw. den entsprechenden Dienst erfahren sollen.

Die TKF P1 soll im dargestellten Ausführungsbeispiel eine Anrufweiterleitung realisieren. Die TKF P2 soll eine Rufterminierung via Paketvermittlungsnetz und DSL-Anschluss bereitstellen, d.h. ein eingehender Ruf wird an ein Paketvermittlungsnetz 10, insbesondere das Internet und von diesem über eine DSL-Leitung an einen bestimmten Teilnehmeranschluss geroutet. Solche VoIP-Rufterminierungen sind an sich bekannt und erfolgen beispielsweise unter Verwendung eines so genannten SIP-Protokolls. Auf den genauen Ablauf wird an dieser Stelle nicht näher eingegangen.

Es wird nun der Fall betrachtet, dass der gerufene B1-TLN eine Anrufweiterleitung an einen anderen B2-TLN eingestellt hat, d.h. ankommende Rufe werden an einen anderen Teilnehmeranschluss geroutet. Der B2-TLN soll sich im betrachteten Ausführungsbeispiel ebenfalls in dem Netz TK3 befinden, was aber nicht notwendig ist.

Die TKF P1 zur Anrufweiterleitung erfasst den eingehenden Ruf und prüft, ob der rufende TLN in "seinen" Eigen-Attributen gespeichert ist und dementsprechend eine Anrufweiterleitung erfahren soll, und an welche neue Rufnummer diese erfolgen soll. Es sei dabei angenommen, dass der A-TLN in den Eigen-Attributen der TKF P1 enthalten ist, so dass der Ruf an den B2-TLN weitergeleitet wird. Des Weiteren prüft auch die TKF P2, ob der rufende TLN in "seinen" Eigen-Attributen enthalten ist. Auch dies soll im betrachteten Ausführungsbeispiel der Fall sein. Die TKF P1 wartet, bevor sie eine Anrufbehandlung des ankommenden Anrufs vornimmt, jedoch zunächst die TKF P2 ab, da diese vorrangig eingestuft ist.

Nach Vorliegen der neuen Rufnummer, zu dem der Ruf terminiert werden soll, realisiert nun die TKF P2 eine Rufterminierung über das Paketvermittlungsnetz 10 und den DSL-Anschluss, Dies führt dazu, dass die Daten in das Paketvermittlungsnetz 10 und von diesem über einen DSL-Anschluss an den B2-TLN geleitet werden. Dem B2-TLN kann dabei beispielsweise eine Box zugeordnet sein, die die IP-Daten der VolP-Terminierung wieder in normale Sprachdaten umwandelt. Alternativ ist der B2-TLN bzw. sein Telefon selbst IP-fähig.

Wichtig für die vorliegende Erfindung ist, dass jede der vorhandenen TKFs P1, P2 unmittelbar auf einen eingehenden Anruf zugreift und prüft, ob der Anruf eine Anrufbehandlung entsprechend der eigenen TKF erfahren soll,

Das Zugreifen auf den ankommenden Anruf kann dabei grundsätzlich zu unterschiedlichen Zeitpunkten erfolgen, wobei dieser Zeitpunkt von (dem jeweiligen Dienst bzw.) der jeweiligen TKF abhängen kann. Ein erster Zeitpunkt des Zugriffs ist ein Zeitpunkt, zu dem zwischen dem Switch S2 und der Teilnehmervermittlungsstelle B-VS noch keine Rufsignalisierung stattgefunden hat. Ein zweiter Zeitpunkt ist ein Zeitpunkt, zu dem eine Rufsignalisierung zwischen dem Switch S2 und der Teilnehmervermiftlungsstelle B-VS bereits stattgefunden hat, jedoch der Ruf noch nicht terminiert (durchgeschaltet) wurde, Die TKF bemächtigt sich dabei gewissermaßen des Anrufs kurz vor seiner Terminierung. Die Terminierung kann dabei um einen bestimmten Zeitraum von beispielsweise einer Sekunde verzögert werden.

In einer dritten Variante greift eine TKF auf einen ankommenden Anruf zu, nachdem bereits eine Terminierung zum B1-Teilnehmer erfolgt ist. Dabei kann vorgesehen sein, dass die erfolgte Terminierung im Rahmen der Anrufbehandlung wieder aufgegeben wird.

Es wird darauf hingewiesen, dass bevorzugte Dienste solche sind, bei denen einem gerufenen TLN, der zum Zeitpunkt des Eingehens eines ankommenden Rufes bereits mit einem dritten TLN telefoniert oder der sich im Internet befindet, ein zusätzlicher Dienst zur Rufbehandlung bereitgestellt wird. Solche zusätzlichen Dienste sind in der DE 199 43 742 A1 beschrieben, auf die insofern ausdrücklich Bezug genommen wird.

Im Folgenden werden ergänzend zu den Figuren spezielle Anwendungsbeispiele der erfindungsgemäßen TKGP diskutiert:

### F1. E-Learning TKGP-System

Es wird eine als E-Learning-Management-System (LMS) ausgebildete TKGP bereitgestellt, die ein besonders flexibles elektronisches Lernen ermöglicht. Die LMS-TKGP bietet ihren Studenten ("S1" bis "Sn" der TKGP) die Teilnahme an verschiedenen Kursen an, z.B, zum Thema HTML (TKGV "HTM" bis TKGV "Marketing" der TKGP). Ein Kurs wird jeweils wird von Tutoren (repräsentiert durch TLN-Objekte TLN "T1" bis TLN "Tn") betreut.

Vor dem Start des ersten Kurses eines Studenten "Sn" werden durch den LMS-Betreiber (repräsentiert durch TLN-Objekt "B") die notwendigen Objekte zum "Anmelden" des Studenten erzeugt. Hierzu werden die Voraussetzungen (hat der Student gezahlt, liegen die BewilligungenlFähigkeiten vor, etc.) geprüft. In diesem Beispiel wird erzeugt:
■ mindestens ein TLN-Objekt, z.B. TLN "Sn",
■ mindestens ein als Eigen-Attribut-Objekt ausgebildetes Attribut-Objekt zur Identifizierung des Studenten (das neben ObjektlD und ObjektTyplD noch Name, eMail-Adresse, Starttermin, etc. und die Matrikelnummer enthält),
■ mindestens ein als Relations-Attribut-Objekt ausgebildetes Attribut-Objekt zur Verknüpfbarkeit mit dem jeweiligen Kurs (z.B. TKGV "HTML").

Zum erfolgreichen Bestehen eines Kurses muss jeder Student zu einer Anzahl von Kurs-Kapiteln eine Hausaufgabe von der LMS-TKGP herunterladen (TKF "ftp download_HA") und die Lösung auf die LMS-TKGP hochladen (TKF "ftp upload_HA"). Zuvor jedoch muss der Student einen Verständnistest in Form eines Multiple-Choice-Fragenkatalogs VT zum jeweiligen Kurs-Kapitel korrekt beantworten (TKF "check_web_formular_VT") um die Berechtigung (Attribut-Objekt in Form eines Eigen-Attributs "Zugriffs-Berechtigung HA") zum Herunterladen der Hausaufgabe zu erlangen.

Nach erfolgreicher Lösung aller Hausaufgaben zum Kurs erhält der Student die Zugangsberechtigung zur Abschluß/Präsenz-Prüfung, PP (Eigen-Attribut "Zugriffs-Berechtigung PP_HTML", Relations-Attribut(e) zwischen den Objekten "TLN Sx", "TKGV HTML","TKF ftp_upload_PP_HTML", "TKF check_web formular_VT_HTML").

Das erfindungsgemäße Management der TKGVs der LMS-TKGP ermöglicht den Studenten, im Prinzip beliebige Anforderungen an die LMS-TKGP zu richten, beispielsweise:
a) Ein Student S1 wünscht, dass ab der nächsten Hausarbeit seine Lösungen vor dem Hochladen (mittels der TKF "ftp_upload_HA") durch ein Prüfprogramm (z.B. tidy, validator.W3.org) auf Korrektheit geprüft werden und richtet eine entsprechende Anforderung an die LMS-TKGP.
   Hierbei stellt die LMS-TKGP in einem ersten Schritt ein treibendes Objekt (Objekt-1) in Form des Teilnehmer-Objekts TLN S1 bereit (identifiziert es in diesem Beispiel also), das ein weiteres Objekt (Objekt-3), zum verlangten Prüfen der Lösungen definiert.
   Die LMS-TKGP identifiziert oder definiert weiterhin ein änderndes Objekt (Objekt-2) in Form eines Operations-Attribut-Objektes (hier "Creator" genannt). Dieses ändernde Objekt (Objekt-3) ist in der Lage, das zu ändernde Objekt (Objekt-3), wie durch das treibende Objekt TLN S1 (Objekt-1) definiert, bereitzustellen. Im vorliegenden Beispiel existiert das zu ändernde Objekt (Objekt-3) zu diesem Zeitpunkt noch gar nicht, sondern muss durch Objekt-2 erst erzeugt werden.
   Das ändernde Objekt "Creator" (Objekt-2) wird durch die LMS-TKGP in einem zweiten Schritt in eine für sie ausführbare Form überführt und ausgeführt, Durch das Ausführen entsteht das geänderte Objekt (Objekt-3) in Form eines neuen Operations-ATT-Objektes "HTML Conformance Check".
   Das geänderte Objekt "HTML Conformance Check", Objekt-3, wird automatisch in eine durch die LMS ausführbare Darstellung umgewandelt, so dass es beim Herunterladen der nächsten Hausaufgabe durch TLN S1 zur Verfügung steht.
   Treibendes Objekt (Objekt 1): TLN "S1"
   Änderndes Objekt (Objekt 2): Operations-ATT ("Creator")
   Geändertes Objekt (Objekt 3): Operations-ATT ("HTML Conformance Check"), Berichts-ATT HA Zeitpunkt: beim Herunterladen der nächsten Hausaufgabe durch TLN S1
b) Ein Tutor T1 erzeugt einen TKF "VNC" um gemeinsam mit seinen Studenten den Quellcode besprechen zu können.
   Treibendes Objekt (Objekt 1): TLN "T1"
   Änderndes Objekt (Objekt 2): Operations-ATT ("Creator")
   Geändertes Objekt (Objekt 3): TKF "VNC" (neu erzeugt)
   Zeitpunkt: sofort
c) Ein TLN S3 bringt seine privaten Geräte und eine Videokonferenzmöglichkeit (z.B. Messenger) in die TKGV ein, um mit dem Tutor T2 Sichtkontakt und eine größere Vertrautheit zu erlangen. Treibendes Objekt (Objekt 1): TLN "S3"
   Änderndes Objekt (Objekt 2): Operations-ATT ("Erweitere Chat zu Videokonferenz") Geändertes Objekt (Objekt 3): TKGV zwischen "S3" und "T2"
   Zeitpunkt: durch TLN S3 spezifiziert, z.B. Datum, Uhrzeit
d) Ein TLN S4 erzeugt eine TKF, die die TKFs zum Lesen des Lehrmaterials, des Hoch- und Herunterladens von HA und das Durchführen der VTs auf seinem Handy erlaubt.
   Treibendes Objekt (Objekt 1): TLN "S4"
   Änderndes Objekt (Objekt 2): Operations-ATT (verknüpft die TKFs zum Lesen des Lehrmaterials, des Hoch- und Herunterladens von HA und das Durchführen der VTs mit der TKF "Handyeinbindung")
   Geändertes Objekt (Objekt 3): TKF "Handyeinbindung"
   Zeitpunkt: sofort
e) Tutor T3 erzeugt eine TKF, die alle eingehenden HA/Studentenanfragen auf seinem Handy signalisiert.
   Treibendes Objekt (Objekt 1): TLN "T3"
   Änderndes Objekt (Objekt 2): TKF "ftp_upload_HA" oder TKF "Anfrage"
   Geändertes Objekt (Objekt 3): TKF "Handyeinbindung"
   Zeitpunkt: bei der nächsten eingehenden HA oder Anfrage

### F2. Beispiel "Krankenhaus"-TKGP

Eine TKGP ist als Managementsystem innerhalb eines Krankenhauses ("Krankenhaus"-TKGP) ausgebildet, wobei Patienten, die durch TLN-Objekte (TLN "P1", ..., "Pn") der TKGP repräsentiert werden, bestimmten Behandlungen (TKGV "B1",..., "Bn") unterzogen werden und bestimmte Dienste (TKGV "D1",..., "Dn") beziehen können. Die Behandlungen werden durch Mitarbeiter des Krankenhauses (TLN-Objekte "M1",..., "Mn") durchgeführt.

In dieser TKGP gibt es selbstverständlich eine Menge von Sicherheits- und Authentifizierungsalgorithmen, die hier aber nicht weiter betrachtet werden sollen.

Kommt ein Patient in das Krankenhaus, wird entweder das ihm zugeordnete (bereits vorhandene) TLN-Objekt "Pn" weitergeführt oder ein neues für ihn angelegt. Für jeden "Pn" werden Berichte über alle Behandlungen erzeugt (Berichts-ATT-Objekte).

Das Management der Krankenhaus-TKGP ermöglicht z.B. Folgendes:
a) Ein Arzt M1 hat ein Relations-ATT erzeugt, dass er nur dann eine Operation (TKGV "Operation") ausführt, wenn entweder Schwester Mx oder Schwester My an der Operation beteiligt sind. Treibendes Objekt (Objekt 1): TLN "M1"
   Änderndes Objekt (Objekt 2): TLN "Einsatzleiter"
   Geändertes Objekt (Objekt 3): TKGV "Operation" (erweitert um das Relations-ATT, dass immer Mx oder My verknüpft sein muss)
   Zeitpunkt: bei der nächsten Einsatzplanung
   In einem ersten Schritt werden die Objekte TLN M1, TLN "Einsatzleiter" und der TKGV "Operation" identifiziert, als die 3 Objekte, die für die gewünschte Änderung der TKGP benötigt werden; als änderndes Objekt wird das TLN-Objekt "Einsatzleiter" benötigt, da TLN "M1" nicht die Berechtigung besitzt, den TKGV "Operation" zu modifizieren.
   In einem zweiten Schritt wird das Objekt 2 (änderndes Objekt) durch die TKGP automatisiert abgeleitet und Objekt 2 führt die Änderung an Objekt 3 durch. In einem dritten Schritt muss in diesem Fall vor der nächsten Einsatzplanung durchgeführt werden, denn die die gewünschte Änderung soll zur nächsten Einsatzplanung bereits zur Verfügung stehen. D.h. der TKGV "Operation" wird durch das Objekt "Einsatzleiter" um das Relations-ATT erweitert. Anschließend wird das geänderte Objekt (TKGV "Operation", erweitert um das Relations-ATT) durch die TKGP abgeleitet und das "alte" Objekt "Operation" wird durch das um das Relations-ATT erweiterte Objekt substituiert.
b) Für die Aufnahme (= TKGV "Aufnahme") eines Privatpatienten ist als Operations-ATT eingestellt, dass über seine Krankenversicherung Berichte über Behandlungen von anderen Ärzten angefordert werden. (Dazu muss die TKGP der Krankenversicherung über TKGVs verfügen, die die entsprechenden Ärzte identifizieren und von ihnen Berichte abrufen können.)
   Treibendes Objekt (Objekt 1): TKGV "Aufnahme"
   Änderndes Objekt (Objekt 2): Operations-ATT (unter Auswertung des Eigen-ATTs "Privatpatient")
   Geändertes Objekt (Objekt 3): Berichts-ATT eines Privatpatienten
   Zeitpunkt: bei Erstellung der Krankenhaus TKGP
c) Für Patienten, die jünger als 10 Jahre sind, stellt das Krankenhaus einen TKGV D1 bereit, der Audio- und Videodaten des Patienten (live) überträgt und von beliebig vielen, durch die Erziehungsberechtigten autorisierten Personen empfangen werden kann. Zusätzlich können diese Personen für den Patienten Audio- und Videodaten einspielen; dabei kann es sich um Simultandaten handeln (Gespräche) oder auch um Aufzeichnungen (Buch, Spiel).
   Treibendes Objekt (Objekt 1): TLN "Krankenhausverwaltung"
   Änderndes Objekt (Objekt 2): TLN "Krankenhaus"
   Geändertes Objekt (Objekt 3): TKGV "D1" (neu erstellt)
   Zeitpunkt: sofort
d) Wenn ein Mitarbeiter unter Zeitdruck an einen bestimmten Ort innerhalb des Krankenhauses kommen muss, kann er den TKGV D2 modifizieren, der ihn anstelle auf dem normalen Weg den zur Zeit schnellsten Weg entlang führt (z.B. unter Abfrage der in den Fahrstühlen eingegebenen Halts, Hindernissen in Gängen ,...).
   Treibendes Objekt (Objekt 1): TLN Mitarbeiter unter Zeitdruck
   Änderndes Objekt (Objekt 2): Operations-ATT
   Geändertes Objekt (Objekt 3): TKGV "D2" (verknüpft mit dem Mitarbeiter)
   Zeitpunkt: Erfolgreiche Authentifizierung des Mitarbeiters
e) Ein Krankentransport kann von der Krankenhaus TKGP den TKGV D3 abrufen, mit dessen Hilfe er erste Untersuchungsergebnisse als Berichte zu dem zum Patienten gehörenden TLN Objekt "P3" übertragen und Personal, Equipment und Räumlichkeiten vorbestellen kann, so dass sie bei seiner Ankunft im Krankenhaus bereits bereit stehen und damit ein Teil des TKGVs "Aufnahme" vorweggenommen wird. (Des Weiteren leitet ihn der TKGV auf dem schnellsten Weg über das Krankenhausgelände zum passenden Flügel des Krankenhauses.)
   Treibendes Objekt (Objekt 1): TLN "M2" (Krankentransport)
   Änderndes Objekt (Objekt 2): TKGV "D3"
   Geändertes Objekt (Objekt 3): TKGV "Aufnahme P3"
   Zeitpunkt: nach Übermittlung der Daten und Anforderung des Personals
f) Für den Fall, dass für eine bestimmte Behandlung B1 mindestens ein Mitarbeiter nicht anwesend sein kann, stellt die Krankenhaus TKGP TKGVs zur Verfügung, über die so ein Mitarbeiter seine Behandlung remote ausführen kann.
   Treibendes Objekt (Objekt 1): TLN "Krankenhaus"
   Änderndes Objekt (Objekt 2): Operations-ATT (füge "remote-Behandlungsmöglichkeit" hinzu) Geändertes Objekt (Objekt 3): TKGV Behandlung "B1"
   Zeitpunkt: wenn die TKGP feststellt, dass ein für die Behandlung benötigter Mitarbeiter nicht vor Ort ist
g) Bei jeder Anforderung von Mitarbeitern oder Equipment (sowohl bei gerade erstellten Anforderungen als auch kurz vor Eintritt von schon vorhandenen Anforderungen) wird ein Operations-ATT der Krankenhaus TKGP ausgewertet, das prüft, ob die maximale Einsatzzeit durch diesen Einsatz überschritten würde. Wäre dies der Fall, schlägt das Operations-ATT einen Ersatz vor; wird dieser nicht angenommen, kann die Anforderung nur durch Freigabe von festgelegten Personen geschehen.
   Treibendes Objekt (Objekt 1): TLN "Krankenhaus,"
   Änderndes Objekt (Objekt 2): Operations-ATT
   Geändertes Objekt (Objekt 3): TKF "Einsatz von Mitarbeiter/Equipment"
   Zeitpunkt: Überschreiten maximaler Einsatzzeit betroffener Mitarbeiter/Equipments

### F3. Beispiel "Bank"-TKGP

Eine TKGP (Bank-TKGP) ist als Banking-Management-System ausgebildet. In einer Bank werden zwischen Konten (TLN-Objekte "K1",..., "Kn" der Bank-TKGP) Transaktionen (= TKGV "V1",...., "Vn") durchgeführt und die Konten durch Bankmitarbeiter (= TLN-Objekte "M1", ..., "Mn") betreut. Die Konten gehören Kontoinhabern (= TLN-Objekte I1", "In").

In dieser TKGP gibt es selbstverständlich eine Menge von Sicherheits- und Authentifizierungsalgorithmen, die hier aber nicht explizit erläutert werden.

Nur ein Bankmitarbeiter kann ein Konto eröffnen oder schließen; dies jedoch nur auf Weisung des jeweiligen Kontoinhabers. Viele der Vns sind nur dann möglich, wenn der Kontoinhaber zustimmt, wobei er generell einer Klasse von Vns zustimmen kann (z.B. monatliche Überweisung der Miete) oder einzelnen Vns (z.B. Aktienkauf). Des Weiteren gibt es Vns, die nicht zustimmungspflichtig sind (z.B, Zinsausschüttung).
Für jede Änderung, die durch einen Kontoinhaber veranlasst wird, lässt die Bank über Berichts-ATTs CDRs ("Call Data Records") schreiben, um diese Nutzung der Dienstleistungen der Bank-TKGP den (realen) Kontoinhabern in Rechnung stellen zu können.

Das erfindungsgemäße Management der Bank-TKGP ermöglicht zum Beispiel:
a) Ein Kontoinhaber hat folgendes Operations-ATT definiert: wenn über seine Kreditkarte ein Betrag angefordert wird, dann möchte er sofort eine Nachricht auf sein Handy bekommen über Höhe und Ursache der Anforderung. Wenn er diese Nachricht innerhalb von einer Stunde mit einer zuvor definierten PIN beantwortet, dann darf die Abbuchung nicht durchgeführt werden. Treibendes Objekt (Objekt 1): TKF "Abbuchungsanforderung per Kreditkarte"
   Änderndes Objekt (Objekt 2): Operations ATT
   Geändertes Objekt (Objekt 3): TKF "Nachricht aufs Handy" (neu erstellt)
   Zeitpunkt: nächste Woche, wenn die Kreditkarte aktiviert worden ist
   In einem ersten Schritt werden die Objekte TKF "Abbuchungsanforderung per Kreditkarte"` und das neu erstellte Operations-ATT identifiziert. Die TKF "Nachricht aufs Handy" wird definiert. In einem zweiten Schritt wird das Objekt 2 (das Operations-ATT) abgeleitet und die neue TKF erzeugt. In einem dritten Schritt wird die neue TKF automatisiert durch die TKGP abgeleitet und steht dann ab Freischaltung der Kreditkarte zur Verfügung.
b) Für jedes Konto Kn gibt es ein Eigen-ATT, das den verfügbaren Kreditrahmen beschreibt. Der Mitarbeiter Mk hat ein Relations-ATT des TKGVs "Aktienkauf" für alle Konten, die er betreut so modifiziert, dass ein Aktienkauf nur dann möglich ist, wenn der Kreditrahmen des Kontos dadurch nicht überschritten wird.
   Treibendes Objekt (Objekt 1): Operations-ATT "Führe TKF "Kontostand neu ermitteln" durch" Änderndes Objekt (Objekt 2): TKF "Kontostand neu ermitteln"
   Geändertes Objekt (Objekt 3): TKGV "Aktienkauf" (es werden keine Aktien gekauft)
   Zeitpunkt: wenn der Kreditrahmen eines Kontos unterschritten ist
c) Ein Kontoinhaber möchte auf Nummer Sicher gehen und definiert auf seinem Konto K1 ein Operations-ATT, dass nur solche Beträge von seinem Konto abgebucht werden dürfen, in denen der Abbuchungs-TKGV eine PIN enthält, die er selber definiert hat.
   Treibendes Objekt (Objekt 1): TLN Konto "K1"
   Änderndes Objekt (Objekt 2): Operations-ATT
   Geändertes Objekt (Objekt 3): Abbuchungs-TKGV (wird mit einer PIN-Abfrage verknüpft) Zeitpunkt: beim nächsten Abbuchungs Wunsch
d) Für einen anderen Kontoinhaber ist eine Firewall für sein Konto K3 definiert, in der festgelegt ist, welche TKGVs sein Konto be/entlasten dürfen (z.B. Abbuchen nur zu Konten Kx, Ky, Kz, und auch nur dann, wenn die Abbuchungsanforderung über den Netzbetreiber/Payment Provider xyz eingereicht worden ist) und welche Summen zu diesen Konten maximal pro Kalendermonat transferiert werden dürfen.
   Treibendes Objekt (Objekt 9): TKGV"Abbuchung"
   Änderndes Objekt (Objekt 2): Operations-ATT
   Geändertes Objekt (Objekt 3): TKF "Kontostand berechnen" (abhängig vom Ergebnis der Firewall Überprüfung)
   Zeitpunkt: wenn für das Konto K3 Online Banking aktiviert wird
e) Ein Kontoinhaber hat für Barauszahlungen von seinem Konto K5 3 Zugangscodes eingerichtet; für jeden Zugangscode hat er eine andere Höhe des monatlichen Verfügungsrahmens eingestellt (Operations-ATT), so dass seine Tochter nicht mehr als ihr monatliches Taschengeld vom Konto abheben kann und dass die Lebenshaltungskosten einen bestimmten Rahmen pro Monat nicht überschreiten.
   Treibendes Objekt (Objekt 1): TLN "K5"
   Änderndes Objekt (Objekt 2): Operations-ATT
   Geändertes Objekt (Objekt 3): TKGV"Barauszahlung"
   Zeitpunkt: Bei Verknüpfung eines TKGV "Barauszahlung" mit "K5"
f) Ein Kontoinhaber modifiziert die Default Berichts-ATTs seines Kontos K6. Er möchte einen Kontoauszug auf sein Handy haben, wenn von seinem Konto innerhalb einer Woche das zweite Mal von demselben Konto K2 Geld abgebucht werden soll,
   Treibendes Objekt (Objekt 1): TLN "K6"
   Änderndes Objekt (Objekt 2): TKGV Abbuchung durch "K7"
   Geändertes Objekt (Objekt 3): TKGV "Kontoauszug" (wird mit "K6" verknüpft) Zeitpunkt: sofort
g) Der Inhaber 11 des Aktienkontos K8 hat sich eine TKF definiert, die 3 unterschiedliche Börsen monitort und den Kurs für eine seiner Aktien überwacht. Des Weiteren hat er einen TKGV "Aktienverkauf' mit einem Operations-ATT versehen, dass alle Anteile dieser Aktie verkauft werden sollen, sobald der Kurs an allen 3 überwachten Börsen über einen bestimmten Wert gestiegen sind,
   Treibendes Objekt (Objekt 1): TLN Aktienkonto "K8" (verwendet ständig die TKF)
   Änderndes Objekt (Objekt 2): Operations-ATT
   Geändertes Objekt (Objekt 3): TKGV "Aktienverkauf" (wird mit "K8" verknüpft)
   Zeitpunkt: Sobald der spezifizierte Wert der Aktie überschritten ist

### F4. Beispiel "Sport&Spiel"-TKGP

Eine TKGP ist als "Sport&Spiel"-Portal ausgebildet. Es können
- Spieler (= TLN "S1", ..., "Sn") bei Wettbüros (= TLN "B1",..., "Bn") Sportwetten (= TKGV "W1", ..,",Wn") abschliessen,
- Spieler (= TLN "C1", ..., "Cn") sich an Online-Gruppenspielen (= TKGV "G1", ..., "Gn") beteiligen oder
- an Sportereignissen (TKGV= "E1",..., "En") online teilnehmen

Ein Spieler Sn darf sich nur dann an einer Wette Wm beteiligen, wenn er laut Schufa kreditwürdig ist, dem Einzug von einer gültigen Kreditkarte zugestimmt hat, beim Kreditkarteninstitut auf keiner Sperrliste steht und bisher noch keine Rücklastschrift veranlasst hat. Ein Einsatz gilt nur dann als platziert, wenn sich der gesetzte Betrag über die Kreditkarte reservieren lässt.

Um an einem Online-Gruppenspiel teilzunehmen, benötigt ein Spieler für jede Spielart andere Eigenschaften; er kann sich für ein Spiel jeweils ein neues TLN-Objekt Cn mit einem Basissatz an Eigen-ATTs geben lassen, oder ein Cj weiterverwenden, das er bereits bei einem vorigen Spiel verwendet hat. Das Verändern der Eigen-ATTs solcher Cx's ist bestimmten Regeln unterworfen: bei Neuerstellung eines Cx darf der Spieler die Werte der für dieses Spiel benötigten Eigen-ATTs frei setzen, aber ihr Gesamtwert darf eine bestimmte, dem jeweiligen Level des Spiels angepasste Summe, nicht überschreiten, Danach werden seine Eigen-ATTs nur noch durch das Spielgeschehen verändert. Ein solcher Cx kann auch durch eine Gruppe von Spielern kontrolliert werden, die sich entweder absprechen, oder sich einer Software bedienen, die das "Aktionsrecht" verwaltet.

Bei Online Spielen, an denen mehrere Gruppen teilnehmen, stellt die TKGP für jede Gruppe einen TKGV bereit, über den sich die jeweiligen Gruppenmitglieder untereinander austauschen können, je nach der Verfügbarkeit der Endgeräte der Gruppenmitglieder (hat z.B. ein Mitglied kein Audio Outputgerät zur Verfügung - oder ist taub - so wandelt die TKGP Sprache simultan in Schrift und wandelt im Gegenzug geschriebene Sätze dieses Teilnehmers für die anderen wieder in Audiodaten um). Die TKGVs der Gruppen zu einem Spiel sind nicht verknüpfbar, so dass jede Gruppe sicher sein kann, dass die anderen Gruppen nicht an ihrem Informationsaustausch beteiligt sind.

Jeder TLN, der an einem Sportereignis E1 teilnimmt, kann für E1 über Operations-ATTs definieren, wann er über welche Kamera(s) und welche(s) Mikrophon(e) "bedient" werden will und sich diverse Arten von Kommentaren einspielen lassen.

An Spielen, die einen Geldeinsatz erfordern, können nur Spieler teilnehmen, die ein Mindestguthaben eingezahlt haben. Die Gewinnspiel-TKGVs können auf dieses ATT der Spieler zugreifen und es abhängig vom Spielergebnis verändern.

Mit dem erfindungsgemäßen Verändern von Kommunikationsgruppenvorgängen (Management) der Sport+Spiel-TKGP ist Folgendes z.B. möglich:
a) Die Spieler S1, S2, S3 möchten sich zu einer Wettgemeinschaft zusammenschließen, d.h. sobald einer der drei sich an einer Wette beteiligt, sollen alle 3 Spieler setzen können. Da die Kreditwürdigkeit einer Wettgemeinschaft für die Wettbüros schwerer zu überprüfen ist, darf das Verändern des TKGV "Wette abschließen" nur von einem Mitarbeiter des Plattformbetreibers vorgenommen werden, der dazu das TLN-Objekt "Plattformbetreiber" nutzt.
   Treibendes Objekt (Objekt 1): TLN "S1"
   Änderndes Objekt (Objekt 2): TLN "Plattformbetreiber"
   Geändertes Objekt (Objekt 3): TKGV "Wette abschließen" (wird statt mit einem Spieler mit den 3 Spielern S1, S2, S3 verknüpft)
   Zeitpunkt: sofort
   In Schritt 1 werden die 3 benötigten Objekte identifiziert: treibendes Objekt TLN "S1", änderndes Objekt TLN "Plattformbetreiber", zu änderndes Objekt der TKGV "Wette abschließen". In Schritt II wird der TLN "Plattformbetreiber" automatisiert durch die TKGP abgeleitet und die Änderung durch den TLN "Plattformbetreiber" am TKGV "Wette abschließen" vorgenommen. In Schritt III wird der "alte" TKGV "Wette abschließen" durch den geänderten substituiert und sofort durch die TKGP automatisiert abgeleitet.
b) Ein Wettbüro B1 möchte einen Gewinn von mindestens 50% machen und nimmt nur dann ein neues Gebot (Operations-ATT, das neue Gebot kann nur unter den besagten Umständen verknüpft werden) für die Wette W1 an, wenn sich mit diesem zusätzlichen Gebot die mindestens 50% noch realisieren lassen würden.
   Treibendes Objekt (Objekt 1): TLN "B1"
   Änderndes Objekt (Objekt 2): Operations-ATT
   Geändertes Objekt (Objekt 3): TKGV "Wette W1" wird um einen Spieler erweitert Zeitpunkt: Zum Start der Wette W1
c) Für einen simulierten Marathonlauf auf Heimlaufbändern möchte sich Spieler C1 selber motivieren und definiert sich eine TKF, die ihm alle Mitläufer auf einer simulierten Strasse anzeigt und seine eigene Repräsentation blinken lässt.
   Treibendes Objekt (Objekt 1): TLN "C1"
   Änderndes Objekt (Objekt 2): TKF (neu erstellt)
   Geändertes Objekt (Objekt 3): TKGV "simulierter Marathonlauf"
   Zeitpunkt: sofort
d) Der Betreiber eines Fantasy Spiels G1 definiert für bestimmte Szenen in dem Spiel Operations-ATTs, die diese Szenen aus dem Spielfluss nehmen, wenn mindestens einer der gerade teilnehmenden Spieler in seinem beim Anmelden in der Plattform hinterlegten Profil ein bestimmtes Merkmal nicht erfüllt (z.B. Alter, Geschlecht, Kredit,..).
   Treibendes Objekt (Objekt 1): TLN "Betreiber"
   Änderndes Objekt (Objekt 2): Spieler, dessen Profil ein ausschließendes Merkmal enthält Geändertes Objekt (Objekt 3): TKGV "G1"
   Zeitpunkt: mit dem nächsten Start von "G1"
e) Ein TLN C3 von Sportereignissen, hat eine TKF definiert, so dass er pro Sportereignis mit anderen "gleichgesinnten" TLNs verbunden wird und virtuell mit ihnen gemeinsam am Ereignis teilnimmt.
   Treibendes Objekt (Objekt 1): TLN "C3"
   Änderndes Objekt (Objekt 2): Operations-ATT, das "gleich Gesinnte" TLNs sucht Geändertes Objekt (Objekt 3): TKF, die die "Gleichgesinnten" verbindet (neu erzeugt) Zeitpunkt: vor dem nächsten Fußballspiel

### G. Abkürzungsverzeichnis

- TKGP: Technische-Kommunikationsgruppen-Plattform
- TKGV: technischer Kommunikationsgruppen-Vorgang
- ATT: Attribut
- TLN: Teilnehmer-Objekt
- TKF: Telekommunikationsfunktion
- A: attributierbar

## Patentansprüche

1. Verfahren zur Steuerung der Behandlung der für einen gerufenen Telekommunikations (TK)-Teilnehmer bestimmten Anrufe unter Verwendung eines Technischen-KommunikationsgruppenVorgangs (TKGVs), mit den Schritten:
- Bereitstellen mindestens einer Telekommunikationsfunktion (TKF), die jeweils eine definierte Anrufbehandlung eines TKGVs ausführen kann;
- Speichern in jeder der mindestens einen TKFs, als Reaktion auf die Eingabe durch den gerufenen Teilnehmer, von Attributen zu denjenigen anrufenden Teilnehmern, deren TKGVs die in der jeweiligen TKF definierte Anrufbehandlung erfahren sollen;
- Vornahme einer Anruferidentifizierung zu einem TKGV;
- in jeder der mindestens einen TKFs, Feststellen anhand der Anruferidentifizierung und der gespeicherten Attribute, ob der TKGV die in der jeweiligen TKF definierte Anrufbehandlung erfahren soll;
- für diesen Fall, Durchführen der Anrufbehandlung durch die jeweilige TKF.

2. Verfahren nach Anspruch 1, **dadurch gekennzeichnet, dass** die mindestens eine TKF in einem TK-Netz bereitgestellt wird, das durch den anrufenden Teilnehmer oder durch den gerufenen Teilnehmer preselektiert ist.

3. Verfahren nach Anspruch 2, **dadurch gekennzeichnet, dass** das Bereitstellen der mindesten einen TKF durch eine Dienste-Vermittlungsstelle des preselektierten Netzes erfolgt, wobei der TKGV über die Dienste-Vermittlungsstelle des preselektierten Netzes zum gerufenen Teilnehmer aufgebaut wird.

4. Verfahren nach einem der Ansprüche 1 bis 3, **dadurch gekennzeichnet, dass** der TKGV ein ankommender Anruf ist und die mindestens eine TKF die Feststellung, ob der betrachtete TKGV in Form des ankommenden Anrufs die in der jeweiligen TKF definierte Anrufbehandlung erfahren soll oder nicht, vor einem Terminieren des ankommenden Anrufs zum gerufenen Teilnehmer vornimmt.

5. Verfahren nach einem der Ansprüche 1 bis 4, **dadurch gekennzeichnet, dass** der Schritt des Speicherns von Attributen als Reaktion auf die Eingabe durch den gerufenen Teilnehmer unter Verwendung einer grafischen Benutzeroberfläche auf einem an den gerufenen Teilnehmeranschluss angeschlossenen Computer erfolgt.

6. Verfahren nach einem der Ansprüche 1 bis 5, **dadurch gekennzeichnet, dass** eine Änderung der Attribute, die einer TKF zugeordnet sind, stets nur für die betrachtete TKF erfolgt und Wirkung hat.

7. Verfahren nach einem der Ansprüche 1 bis 6, **dadurch gekennzeichnet, dass** die Anruferidentifizierung zu einem TKGV eine automatische Rufnummeridentifizerung umfasst.

8. Verfahren nach einem der Ansprüche 1 bis 7, **dadurch gekennzeichnet, dass** die Anruferidentifizierung zu einem TKGV mindestens eines der folgenden umfasst:
- die Überprüfung eines Zugangscodes, der eine Gruppe von anrufenden Teilnehmern oder einen individuellen anrufenden Teilnehmer repräsentiert;
- die Überprüfung eines Notrufcodes, der eine Gruppe von anrufenden Teilnehmern oder einen individuellen anrufenden Teilnehmer repräsentiert und zusätzlich eine hohe Priorität eines TKGVs signalisiert;
- Eingabeaufforderungen an den anrufenden Teilnehmer, Attribute einzugeben.

9. Verfahren nach Anspruch 8, **dadurch gekennzeichnet, dass** der in jeder TKF durchgeführte Schritt des Feststellens anhand der Anruferidentifizierung und der gespeicherten Attribute, ob der TKGV die in der jeweiligen TKF definierte Anrufbehandlung erfahren soll, das Feststellen umfasst, ob die in der jeweiligen TKF gespeicherten Attribute identisch sind mit den Daten, die als Ergebnis der Anrufidentifizierung vorliegen, oder diese Daten einander zuzuordnen sind.

10. Verfahren nach einem der Ansprüche 1 bis 9, **dadurch gekennzeichnet, dass** eine TKF zur Anrufbehandlung die Weiterleitung eines Rufes von einem ersten TK-Netz an ein zweites TK-Netz vorsieht, das mit dem ersten TK-Netz zusammengeschaltet ist, wobei der TKGV über das zweite TK-Netz oder ein drittes, mit dem zweiten TK-Netz zusammengeschaltetes TK-Netz terminiert wird.

11. Verfahren nach einem der Ansprüche 1 bis 10, **dadurch gekennzeichnet, dass** eine TKF zur Anrufbehandlung eine Netzkonvertierung, eine Medienkonvertierung, eine Anrufweiterleitung, eine Anrufbeantworterfunktion und/oder ein Anklopfen vornimmt.

12. Verfahren nach einem der Ansprüche 1 bis 11, **dadurch gekennzeichnet, dass** eine TKF zur Anrufbehandlung einem besetzten gerufenen Teilnehmer mindestens einen zusätzlichen Dienst bereitstellt.

13. Verfahren nach einem der Ansprüche 1 bis 12, **dadurch gekennzeichnet, dass** jede TKF ausschließlich aufgrund ihrer lokalen Attribute entscheidet, ob sie zu einem TKGV die durch sie bereitgestellte Anrufbehandlung durchführt oder nicht, unabhängig von den Attributen anderer TKF.

14. Verfahren nach einem der Ansprüche 1 bis 13, **dadurch gekennzeichnet, dass** jeder TKF ein Rang zugeordnet ist und für den Fall, dass mehrere TKFs eine Anrufbehandlung vornehmen, die TKF mit dem höchsten Rang zuerst durchgeführt wird.

15. Verfahren nach einem der Ansprüche 1 bis 14, **dadurch gekennzeichnet, dass** mindestens eine TKF eine selbsttätig agierende Prozedur oder ein selbsttätig agierender Prozess ist.

16. Verfahren nach der vorangehenden Ansprüche, **dadurch gekennzeichnet, dass**
- eine der TKF zur Anrufbehandlung ein Multiplexen der Daten des TKGVs mit den Daten einer bereits existierenden Verbindung zu dem gerufenen Teilnehmer vornimmt, und/oder
- jede TKF auf einen TKGV zu dem gerufenen Teilnehmer automatisch zugreift und prüft, ob zu diesem TKGV die in der TKF definierte Anrufbehandlung vorzunehmen ist, und/oder
- jede TKF Interrupt-gesteuert auf einen TKGV zugreift, und/oder
- ein TK-Teilnehmer durch ein Teilnehmer-Objekt repräsentiert ist, und/oder
- es sich beim einem TKGV um einen ankommenden Anruf handelt, und/oder
- die Attribute Identifizierungsdaten sind, und/oder
- die Attribute durch ein Eigen-Attribut-Objekt, ein Relations-Attribut-Objekt, ein Operations-Attribut-Objekt und/oder ein Berichts-Attribut-Objekt repräsentiert werden, und/oder
- der Technische-Kommunikationsgruppen-Vorgang (TKGV) von einer Technischen-Kommunikationsgruppen-Plattform (TKGP) verwaltet wird.
